# EUROPEAN PATENT APPLICATION

(11) **EP 4 647 820 A1**
(43) Date of publication of application: **12.11.2025**
(21) Application number: 23914729.1
(22) Date of filing: 27.11.2023
(51) Int. Cl.: G02B 6/36, G02B 6/02

(54) **OPTICAL CONNECTOR FERRULE, OPTICAL CONNECTOR, AND OPTICAL COUPLING STRUCTURE**

(30) Priority: 04.01.2023 JP 2023000155
(71) Applicant: SUMITOMO ELECTRIC INDUSTRIES, LTD., Osaka-shi, Osaka 541-0041 (JP)
(72) Inventor: MORISHIMA Tetsu, Osaka-shi, Osaka 541-0041 (JP)
(74) Representative: TBK
(86) International application number: PCT/JP2023/042329
(87) International publication number: WO 2024/147241

(57) **Abstract**

An optical connector ferrule (20) disclosed herein comprises: a front end face (21); a rear end face (22) arranged side by side with the front end face in a first direction (X); an inner wall surface (26) that is formed between the front end face and the rear end face, and that intersects in the first direction; an introduction hole (24) that extends in the first direction from the rear end face to the inner wall surface, and can introduce, from the rear end face, a holding member (13) for holding a plurality of optical fibers (10); and a plurality of insertion holes (25) which extend in the first direction from the inner wall surface toward the front end face and are arranged in a second direction (Y) intersecting the first direction, and in which leading ends (10a) of the plurality of optical fibers protruding from an end face (13a) of the holding member can be inserted. Each of the plurality of insertion holes includes at least a holding portion (27) that extends in the first direction between the inner wall surface and the front end face, and that has a constant inner diameter capable of holding the leading ends of the optical fibers. The length of the insertion holes in the first direction is 1.5 mm or less.

## Description

### TECHNICAL FIELD

The present disclosure relates to an optical connector ferrule, an optical connector, and an optical coupling structure. This application claims priority from Japanese Patent Application No. 2023-000155 filed on January 4, 2023, the entire contents of which are incorporated herein by reference.

### BACKGROUND ART

Patent literature 1 discloses a ferrule for holding a connection end of an optical fiber ribbon. At the connection end of the optical fiber ribbon, the outer sheath is removed and the connection ends of the plurality of optical fiber core wires are exposed. Inside the ferrule, a fiber insertion space portion communicating with the fiber insertion port of the rear end surface and a plurality of fiber insertion holes extending through in the front-rear direction from the fiber insertion space portion to the connection surface of the ferrule are formed. The connection end of each optical fiber core wire is inserted into each fiber insertion hole from the fiber insertion space portion and fixed.

### CITATION LIST

### PATENT LITERATURE

Patent literature 1: Japanese Unexamined Patent Application Publication No. 2002-333549

### SUMMARY OF INVENTION

An optical connector ferrule according to an embodiment of the present disclosure is an optical connector ferrule into which a support member configured to support a plurality of optical fibers is insertable, the plurality of optical fibers each including a covering portion covered by a resin covering and a tip portion of a glass part protruding from a covering end of the covering portion. The optical connector ferrule includes a front end surface, a rear end surface, the rear end surface and the front end surface being arranged side by side in a first direction, an inner wall surface formed between the front end surface and the rear end surface and intersecting the first direction, an introduction hole into which the support member is able to be introduced from the rear end surface, the introduction hole extending from the rear end surface to the inner wall surface in the first direction, and a plurality of insertion holes into each of which the tip portion of a corresponding one of the plurality of optical fibers protruding from an end surface of the support member is insertable, the plurality of insertion holes extending from the inner wall surface toward the front end surface in the first direction and being arranged side by side in a second direction intersecting the first direction. Each of a plurality of the insertion holes includes at least a holding part extending between the inner wall surface and the front end surface in the first direction and having a constant inside diameter enabling the holding part to hold the tip portion. A length of each of the insertion holes in the first direction is 1.5 mm or less.

### BRIEF DESCRIPTION OF THE DRAWINGS

FIG. 1 is a perspective view of an optical connector according to an embodiment.
FIG. 2 is a cross-sectional view of the optical connector of FIG. 1.
FIG. 3 is another cross-sectional view of the optical connector of FIG. 1.
FIG. 4 is a cross-sectional view of a tape fiber taken along line IV-IV of FIG. 2.
FIG. 5 is a cross-sectional view of an optical connector ferrule provided in the optical connector of FIG. 1.
FIG. 6 is another cross-sectional view of the optical connector ferrule of FIG. 5.
FIG. 7 is a side view of the tape fiber provided in the optical connector of FIG. 1.
FIG. 8 is a view showing a state in which the tape fiber of FIG. 7 is mounted on an optical connector ferrule.
FIG. 9 is a perspective view of an optical coupling structure comprising the optical connector of FIG. 1.
FIG. 10 is a cross-sectional view of an optical connector according to a comparative example.
FIG. 11 is a side view of the tape fiber provided in the optical connector of FIG. 10.
FIG. 12 is a view showing a state in which the tape fiber of FIG. 11 is mounted on an optical connector ferrule.
FIG. 13 is a cross-sectional view of the optical connector according to modification 1.
FIG. 14 is a cross-sectional view of the optical connector according to modification 2.
FIG. 15 is a cross-sectional view of the optical connector according to modification 3.
FIG. 16 is another cross-sectional view of the optical connector of FIG. 15.
FIG. 17 is a cross-sectional view of the optical connector according to modification 4.
FIG. 18 is another cross-sectional view of the optical connector of FIG. 17.
FIG. 19 is a cross-sectional view of the optical connector taken along line XIX-XIX of FIG. 17.
FIG. 20 is a cross-sectional view of an optical connector ferrule provided in the optical connector of FIG. 17.
FIG. 21 is another cross-sectional view of the optical connector ferrule of FIG. 20.
FIG. 22 is a cross-sectional view of the optical connector according to modification 5.
FIG. 23 is another cross-sectional view of the optical connector of FIG. 22.
FIG. 24 is a cross-sectional view of an optical connector ferrule provided in the optical connector of FIG. 22.
FIG. 25 is another cross-sectional view of the optical connector ferrule of FIG. 24.
FIG. 26 is a cross-sectional view of the optical connector according to modification 5.
FIG. 27 is a perspective view of an optical-fiber support member provided in the optical connector of FIG. 26.
FIG. 28 is a perspective view of the modification of the optical fiber holding part.
FIG. 29 is a perspective view of another modification of the optical fiber holding part.

### DETAILED DESCRIPTION

### [Problems to be Solved by the Present Disclosure]

When the optical fiber core wire is mounted in the ferrule, since a clearance between the fiber insertion hole and the connection end portion of the optical fiber core wire is small, it is desirable to insert the connection end portion of the optical fiber core wire into the fiber insertion hole as straight as possible from the viewpoint of avoiding contact of the connection end portion of the optical fiber core wire with the fiber insertion hole. However, in practice, the position of the connection end of the optical fiber core wire is likely to deviate from the ideal position in accordance with the length of the optical fiber core wire from an outer sheath. Thus, the connection end portion may be inserted into the fiber insertion hole in a state where the posture of the connection end portion of optical fiber core wire is largely inclined. In this case, the connection end portion strongly contacts the fiber insertion hole, and thus there is a concern that a change in an installation state such as twisting and rotation may occur in the optical fiber core wire. Such a change in the installation state of the optical fiber core wire may cause deterioration of optical characteristics such as an increase in connection loss.

The present disclosure provides an optical connector ferrule, an optical connector, and an optical coupling structure, which can reduce the occurrence of the change in the installation state of the optical fiber.

### [Advantageous Effects of Present Disclosure]

According to the optical connector ferrule, the optical connector, and the optical coupling structure according to the present disclosure, it is possible to reduce the occurrence of the change in the installation state of the optical fiber.

### [Description of Embodiments of Present Disclosure]

First, the contents of embodiments of the present disclosure will be listed and explained.
(1) An optical connector ferrule according to an embodiment of the present disclosure is an optical connector ferrule into which a support member configured to support a plurality of optical fibers is insertable, the plurality of optical fibers each including a covering portion covered by a resin covering and a tip portion of a glass part protruding from a covering end of the covering portion. The optical connector ferrule includes a front end surface, a rear end surface, the rear end surface and the front end surface being arranged side by side in a first direction, an inner wall surface formed between the front end surface and the rear end surface and intersecting the first direction, an introduction hole into which the support member is able to be introduced from the rear end surface, the introduction hole extending from the rear end surface to the inner wall surface in the first direction, and a plurality of insertion holes into each of which the tip portion of a corresponding one of the plurality of optical fibers protruding from an end surface of the support member is insertable, the plurality of insertion holes extending from the inner wall surface toward the front end surface in the first direction and being arranged side by side in a second direction intersecting the first direction. Each of a plurality of the insertion holes includes at least a holding part extending between the inner wall surface and the front end surface in the first direction and having a constant inside diameter enabling the holding part to hold the tip portion. A length of each of the insertion holes in the first direction is 1.5 mm or less.
   When a plurality of optical fibers are mounted on the optical connector ferrule, the plurality of optical fibers are introduced into the introduction hole of the optical connector ferrule in a state where the plurality of optical fibers are collectively held by the support member. The tip portion of the fiber protruding from the support member is inserted into the insertion hole through the introduction hole. In this configuration, as the length of the insertion hole increases, the length of the optical fiber protruding from the support member also increases. The longer the length of the optical fiber protruding from the support member, the more likely the tip of the optical fiber is to be largely misaligned. When such a large positional deviation occurs, the tip portion of the optical fiber is inserted into the insertion hole in a state where the posture of the tip portion is largely inclined. In this case, the tip portion may strongly contact the insertion hole or a portion around the insertion hole, and thus, a change in an installation state such as twisting and rotation of the optical fiber may occur. In contrast, when the length of the insertion hole is set to be 1.5 mm or less as in the optical connector ferrule, the length of the optical fiber from the support member can be shortened, and the misalignment of the tip of the optical fiber can be reduced. Thus, the tip portion can be inserted into the insertion hole in a state where the inclination of the posture of the tip portion of the optical fiber is suppressed, so that the tip portion does not strongly contact the insertion hole or the like. As a result, it is possible to reduce the occurrence of change in the installation state, such as twisting and rotation of the optical fiber, due to friction between the insertion hole or the like and the tip portion.
(2) In the optical connector ferrule according to the above (1), the insertion holes may extend from the holding part to the inner wall surface in the first direction and may further include a tapered portion having a diameter decreasing from the inner wall surface toward the holding part. In this case, the tip portion of the optical fiber can be easily inserted into the holding part. Furthermore, in this configuration, the length of the insertion hole can be made shorter than in a configuration in which the insertion hole has another portion between the tapered portion and the inner wall surface, and thus the misalignment of the tip of the optical fiber can be suppressed to be smaller. This makes it possible to more reliably reduce the occurrence of a change in the installation state of the optical fiber.
(3) In the optical connector ferrule according to the above (1) or (2), the introduction hole may include an abutment surface configured such that the support member abuts against the abutment surface in the first direction, and the abutment surface may be formed at a position away from the inner wall surface in the first direction. When the distance from the support member to the inner wall surface is too short, the optical fiber between the support member and the inner wall surface is likely to bend sharply for the alignment of the optical fiber protruding from the support member with the insertion hole of the inner wall surface. As in the above-described configuration, when the abutment surface is formed at a position away from the inner wall surface, the space between the support member and the inner wall surface can be maintained, and thus, the occurrence of sharp bending in the optical fiber between the support member and the inner wall surface can be reduced. This can reduce the application of excessive bending stress to the optical fiber.
(4) In the optical connector ferrule according to the above (3), a distance between the inner wall surface and the abutment surface in the first direction may be 0.5 mm to 2 mm. Thus, by setting the distance between the inner wall surface and the abutment surface to be 0.5 mm or more, it is possible to more reliably reduce the occurrence of sharp bending in the optical fiber, and thus it is possible to more reliably reduce the application of excessive bending stresses to the optical fiber. Further, by setting the distance between the inner wall surface and the abutment surface to be 2 mm or less, it is possible to reduce the length of the tip portion of the optical fiber from the support member from becoming excessively long, and thus it is possible to more reliably reduce the occurrence of a change in the installation state of the optical fiber when the optical fiber is mounted on the optical connector ferrule.
(5) In the optical connector ferrule according to any one of the above (1) to (4), the introduction hole may include a lower surface extending between the inner wall surface and the rear end surface in the first direction and the second direction, and a top surface facing the lower surface. The top surface may be inclined with respect to the lower surface such that a space between the top surface and the lower surface narrows from the rear end surface toward the inner wall surface. In this case, when the support member is inserted into the introduction hole, the support member is advanced along the top surface and the lower surface, and thus the optical fiber held by the support member can be easily guided to the insertion hole. At the same time, the position of the optical fiber with respect to the insertion hole can be determined with high accuracy. This makes it possible to more reliably reduce the occurrence of a change in the installation state of the optical fiber.
(6) In the optical connector ferrule according to any one of the above (1) to (5), the introduction hole may include a first side surface and a second side surface facing each other in the second direction between the inner wall surface and the rear end surface. The first side surface and the second side surface may be inclined with respect to a plane perpendicular to the second direction such that a space between the first side surface and the second side surface narrows from the rear end surface toward the inner wall surface. In this case, when the support member is inserted into the introduction hole, the support member is advanced along the first side surface and the second side surface, and thus the optical fiber held by the support member can be easily guided to the insertion hole. At the same time, the position of the optical fiber with respect to the insertion hole can be determined with high accuracy. This makes it possible to more reliably reduce the occurrence of a change in the installation state of the optical fiber.
(7) In the optical connector ferrule according to any one of the above (1) to (4), the introduction hole may include a lower surface configured to face a bottom surface of the support member introduced in the introduction hole. The lower surface may extend between the inner wall surface and the rear end surface in the first direction and the second direction. A protruding portion extending in the first direction may be formed at the lower surface or the bottom surface. A recess engageable with the protruding portion may be formed at the lower surface or the bottom surface. The recess may be formed at the bottom surface when the protruding portion is formed at the lower surface, and the recess is formed at the lower surface when the protruding portion is formed at the bottom surface. In this case, when the support member is inserted into the introduction hole, the support member is advanced along the protruding portion and the recess, and thus the optical fiber held by the support member can be easily guided to the insertion hole. At the same time, the position of the optical fiber with respect to the insertion hole can be determined with high accuracy. This makes it possible to more reliably reduce the occurrence of a change in the installation state of the optical fiber.
(8) An optical connector according to an embodiment of the present disclosure includes the optical connector ferrule according to any one of the above (1) to (7), the plurality of optical fibers, and the support member configured to be inserted in a state of supporting the plurality of optical fibers into the optical connector ferrule. Since the optical connector includes any one of the optical connector ferrules described above, the occurrence of the change in the installation state of the optical fiber can be reduced as described above.
(9) In the optical connector according to the above (8), the support member may be a resin layer surrounding only the covering portion of each of the plurality of optical fibers. In this case, the covering portion of the optical fiber having a relatively high strength is held by the support member, and thus it is possible to reduce the occurrence of flaw to the optical fiber due to stress concentration on the boundary between the support member and the optical fiber.
(10) In the optical connector according to the above (8), the support member may be a resin layer surrounding only the tip portion of each of the plurality of optical fibers. In this case, since the clearance between the tip portion and the support member can be reduced, the positional deviation of the tip of the optical fiber can be further reduced. This makes it possible to more reliably reduce the occurrence of a change in the installation state of the optical fiber.
(11) In the optical connector according to the above (8), the support member may have a plurality of V grooves extending in the first direction and may be arranged side by side in the second direction, the plurality of V grooves being each configured to accommodate a corresponding one of the plurality of optical fibers. In this case, the tip portion of the optical fiber can be inserted into the holding part of each insertion hole in a state where the posture of the optical fiber is adjusted by the V groove. This can reduce the occurrence of change in the installation state, such as twisting and rotation of the optical fiber, due to friction between the insertion hole or the like and the tip portion.
(12) In the optical connector according to the above (8), the support member may have a plurality of through holes into each of which a corresponding one of the plurality of optical fibers is inserted, the plurality of through holes extending through the support member in the first direction and being arranged side by side in the second direction. In this case, the tip portion of the optical fiber can be inserted into the holding part of each insertion hole in a state in which the posture of the optical fiber is adjusted by the through hole. This can reduce the occurrence of change in the installation state, such as twisting and rotation of the optical fiber, due to friction between the insertion hole or the like and the tip portion.
(13) In the optical connector according to any one of the above (8) to (12), each of the plurality of optical fibers may be one of a multi-core fiber, a polarization maintaining fiber, and a bundle fiber. When such an optical fiber is used, the optical fiber needs to be rotationally aligned. Thus, the change in the installation state, such as the twisting and rotation of the optical fiber, due to the friction between the insertion hole and the tip portion is likely to be a problem. In contrast, the optical connector described above can reduce such a change in the installation state of the optical fiber, and thus can more effectively achieve the above-described effect.
(14) An optical coupling structure according to an embodiment of the present disclosure includes a first optical connector and a second optical connector each as the optical connector according to any one of the above (8) to (13). The first optical connector is disposed so as to face the second optical connector in the first direction and is optically coupled to the second optical connector. Since the optical coupling structure includes the first optical connector and the second optical connector as the optical connectors, as described above, it is possible to reduce the occurrence of the change in the installation state of the optical fiber.

### [Details of Embodiments of Present Disclosure]

Specific examples of an optical connector ferrule, an optical connector, and an optical coupling structure according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

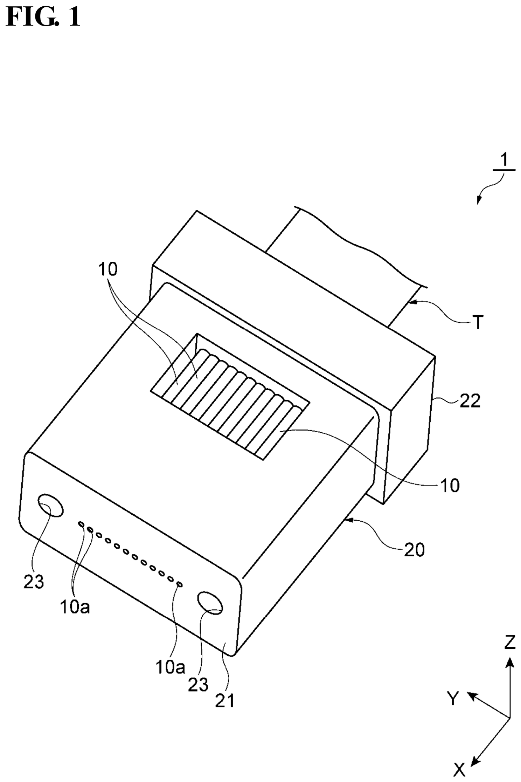

FIG. 1 is a perspective view of an optical connector 1 according to an embodiment. In the following description, for convenience of description, a longitudinal direction of the optical connector 1 is referred to as an X direction (first direction), a lateral direction of the optical connector 1 is referred to as a Y direction (second direction), and a height direction of the optical connector 1 is referred to as a Z direction. The X direction, the Y direction, and the Z direction intersect (in one example, are orthogonal to) each other. In the following description, "up and down" may be defined by a relative position of a Z coordinate, "front and rear" may be defined by a relative position of an X coordinate, and "left and right" may be defined by a relative position of a Y coordinate. The larger Z coordinate is the "upper". The larger X coordinate is the "front". The larger Y coordinate is the "right".

As shown in FIG. 1, the optical connector 1 includes a tape fiber T and an optical connector ferrule (hereinafter, simply referred to as a "ferrule") 20. The tape fiber T includes a plurality of optical fibers 10 extending in the X direction and arranged in the Y direction. Each of the plurality of optical fibers 10 is a cable that transmits an optical signal. FIG. 1 shows an example in which twelve optical fibers 10 are arranged in a line in the Y direction. However, the number of the plurality of optical fibers 10 is not limited to twelve. Other numbers, such as four, eight, or twenty four, may be used. The plurality of optical fibers 10 may be arranged in two or more rows.

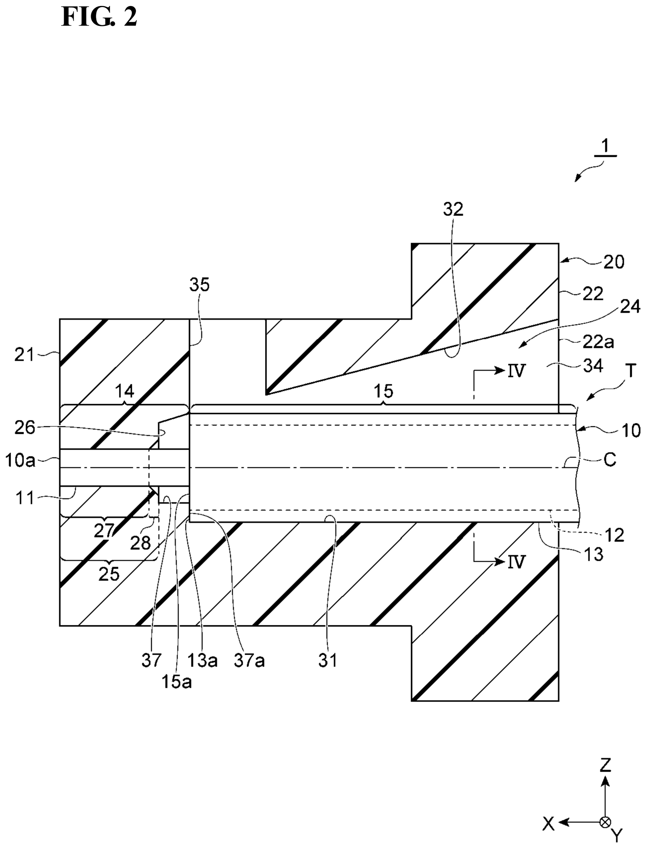

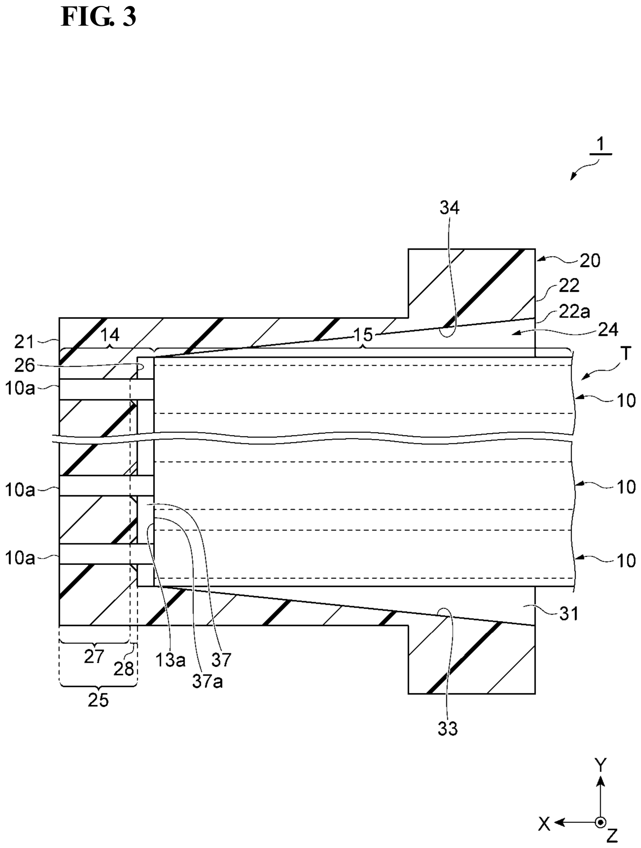

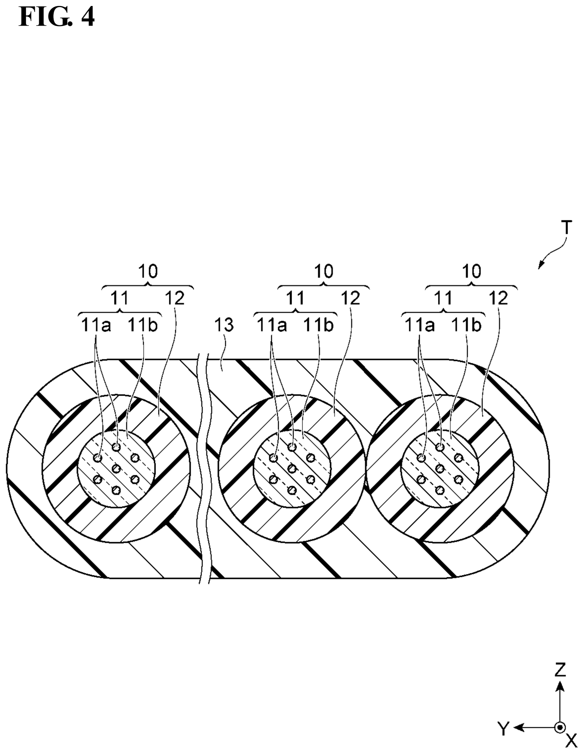

FIG. 2 is a cross-sectional view showing an XZ section of the optical connector 1. FIG. 3 is a cross-sectional view showing an XY cross section of the optical connector 1. FIG. 4 is a cross-sectional view of the tape fiber T taken along line IV-IV of FIG. 2. As shown in FIGS. 2 and 3, each optical fiber 10 has a tip portion 14 and a covering portion 15. The tip portion 14 is a portion of a glass part 11 of the optical fiber 10 that protrudes forward from a covering end 15a of the covering portion 15. That is, the tip portion 14 is the glass part 11 from the covering end 15a to a tip 10a. The covering end 15a is a front edge of the covering portion 15 and is located at a boundary between the covering portion 15 and the tip portion 14.

In the tip portion 14, the glass part 11 is exposed without being covered by the covering portion 15. The tip portion 14 is formed by removing a predetermined length of a resin covering 12 from the tip 10a. Thus, the tip portion 14 can be said to be a coating removed portion where the resin covering 12 is removed. The outer diameter of the tip portion 14 (i.e., the diameter of the glass part 11) may be, for example, 30 µm to 300 µm. The covering portion 15 is a portion where the glass part 11 is covered by the resin covering 12. That is, the covering portion 15 is a portion of the optical fiber 10 which is located rearward of the covering end 15a. The outer diameter of the covering portion 15 may be, for example, 50 µm to 500 µm.

The optical fiber 10 is, for example, an optical fiber that requires rotational alignment with respect to a center axis C. In the present embodiment, a multi-core fiber (MCF) is exemplified as the optical fiber 10 that requires rotational alignment. In this case, as shown in FIG. 4, the glass part 11 of the optical fiber 10 is configured to include a plurality of cores 11a, and a cladding 11b covering the plurality of cores 11a. In the example shown in FIG. 4, at least one of the plurality of cores 11a is arranged at a position deviated from the center axis C.

The number and arrangement of the plurality of cores 11a are not limited to the example shown in FIG. 4, and can be changed as appropriate. For example, the number of the plurality of cores 11a is not limited to six, and may be two, four, or eight or more. The plurality of cores 11a does not have to include the center core arranged on the center axis C. As the optical fiber 10 that requires rotational alignment, in addition to the multi-core fiber, for example, a bundle fiber, a polarization maintaining fiber (PMF), and the like are exemplified. When the optical fiber 10 is a polarization maintaining fiber, the optical fiber 10 has a stress applying portion at a position deviated from the center axis C. In this case, for example, the optical fiber 10 has a core disposed on the center axis C, and a pair of stress applying portions are disposed on both sides of the core.

As shown in FIG. 4, the plurality of optical fibers 10 are held by a tape-shaped resin 13 (support member) in a state of being arranged in a row in the Y direction. The tape-shaped resin 13 is a resin layer that collectively holds the plurality of optical fibers 10 in a bundle in order to reduce positional variation among the plurality of optical fibers 10. The tape-shaped resin 13 is provided, for example, behind the covering ends 15a of the covering portions 15 of the plurality of optical fibers 10. In this case, the tape-shaped resin 13 collectively covers only the covering portions 15 of the plurality of optical fibers 10. As shown in FIG. 2, the position of an end surface 13a of the tape-shaped resin 13 in the X direction is aligned with the position of the covering ends 15a of the covering portions 15 of the plurality of optical fibers 10 in the X direction, for example. The tip portions 14 of the plurality of optical fibers 10 protrude forward from the end surface 13a of the tape-shaped resin 13.

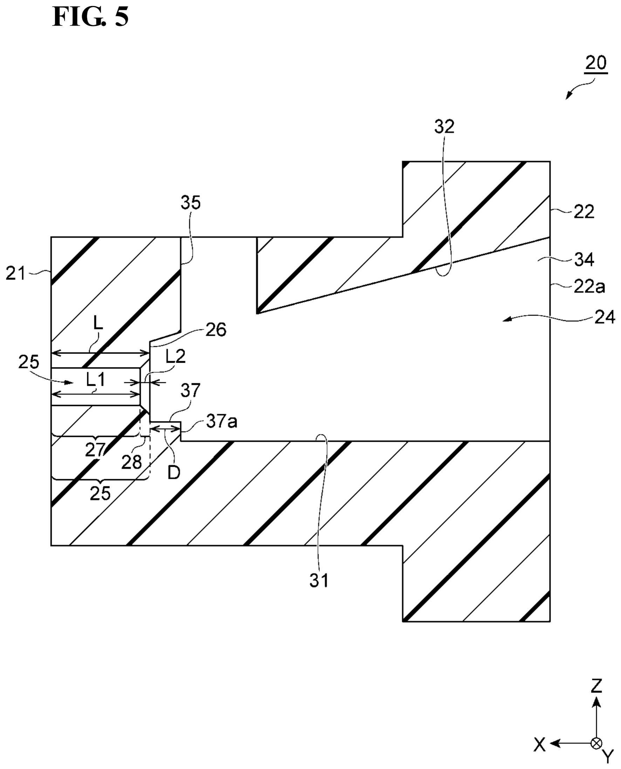

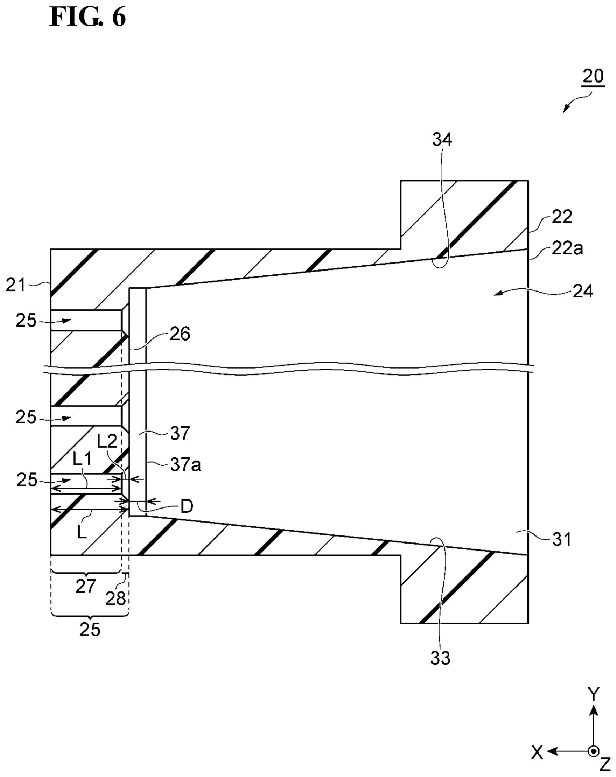

FIG. 5 is a cross-sectional view of the ferrule 20. FIG. 6 is another cross-sectional view of the ferrule 20. The ferrule 20 is a component that holds the end portions of the plurality of optical fibers 10, and is, for example, an MT ferrule. The ferrule 20 has a substantially rectangular parallelepiped appearance. The ferrule 20 is made of a resin such as polyphenylene sulfide (PPS). The ferrule 20 includes, for example, a front end surface 21, a rear end surface 22, a pair of guide holes 23, 23 (see FIG. 1), an introduction hole 24 (fiber introduction hole), and a plurality of insertion holes 25 (fiber insertion holes).

The front end surface 21 is an end surface located at the front end of the ferrule 20 in the X direction. The rear end surface 22 is an end surface located at the rear end of the ferrule 20 in the X direction. The front end surface 21 and the rear end surface 22 extend along the Y direction and the Z direction, and are arranged in the X direction. The pair of guide holes 23, 23 are opened at both ends of the front end surface 21 in the Y direction, and extend in the X direction from the front end surface 21 toward the rear end surface 22 (see FIG. 1). The rear end surface 22 is formed with an opening 22a into which the plurality of optical fibers 10 held by the tape-shaped resin 13 can be inserted.

The introduction hole 24 is formed in the rear portion of the ferrule 20, which is a portion close to the rear end surface 22 between the front end surface 21 and the rear end surface 22. The rear portion of the ferrule 20 is a portion of the ferrule 20 from an inner wall surface 26 to the rear end surface 22 formed inside the ferrule 20. The inner wall surface 26 is a flat surface along the Y direction and the Z direction, and is formed between the front end surface 21 and the rear end surface 22 in the X direction. The introduction hole 24 extends in the X direction from the opening 22a of the rear end surface 22 to the inner wall surface 26. The introduction hole 24 has an internal space into which the plurality of optical fibers 10 held by the tape-shaped resin 13 can be introduced.

The introduction hole 24 has a lower surface 31, a top surface 32, a side surface 33 (first side surface), and a side surface 34 (second side surface), which surround the plurality of optical fibers 10. The lower surface 31, the top surface 32, the side surface 33, and the side surface 34 extend in the X direction from the inner wall surface 26 to the rear end surface 22. The lower surface 31, the top surface 32, the side surface 33, the side surface 34, and the inner wall surface 26 define an internal space of the introduction hole 24. As shown in FIG. 5, the lower surface 31 extends along the X direction and the Y direction between the inner wall surface 26 and the rear end surface 22. The lower surface 31 is, for example, a flat surface parallel to the XY plane, and is formed perpendicular to the inner wall surface 26 and the rear end surface 22.

The top surface 32 faces the lower surface 31 in the Z direction and is separated upward from the lower surface 31. The top surface 32 is, for example, a flat surface inclined with respect to the lower surface 31 along the XY plane. The top surface 32 is inclined with respect to the lower surface 31 such that, for example, the space between the top surface 32 and the lower surface 31 in the Z direction narrows from the rear end surface 22 toward the inner wall surface 26 in the X direction. The minimum value of the space between the top surface 32 and the lower surface 31 in the Z direction is set to be larger than the width of the tape-shaped resin 13 in the Z direction. A window 35 for injecting an adhesive is connected to the top surface 32. The window 35 runs through in the Z direction from the top surface 32 to the outer surface of the ferrule 20. The window 35 is formed at a position closer to the inner wall surface 26 than the rear end surface 22 in the X direction. Thus, the adhesive can be reliably poured from the window 35 into the insertion hole 25 formed in the inner wall surface 26, and thus the optical fiber 10 can be reliably bonded to the insertion hole 25.

As shown in FIG. 6, the side surface 33 and the side surface 34 face each other in the Y direction and are arranged with a space in the Y direction. The side surface 33 and the side surface 34 are, for example, flat surfaces inclined from the XZ plane perpendicular to the Y direction. The side surface 33 and the side surface 34 are inclined with respect to the XZ plane, for example, such that the space between the side surface 33 and the side surface 34 in the Y direction narrows from the rear end surface 22 toward the inner wall surface 26 in the X direction. The minimum value of the space between the side surface 33 and the side surface 34 in the Y direction is set to be larger than the width of the tape-shaped resin 13 in the Y direction.

The lower surface 31, the top surface 32, the side surface 33, and the side surface 34 are configured as a positioning mechanism for guiding the plurality of optical fibers 10 to the plurality of insertion holes 25. Since the lower surface 31 is a flat surface parallel to the XY plane, the positions of the plurality of optical fibers 10 in the Z direction with respect to the plurality of insertion holes 25 are defined. At the same time, the arrangement direction of the plurality of optical fibers 10 is regulated to a state along the arrangement direction of the plurality of insertion holes 25 (i.e., the Y direction) (see FIGS. 2 and 3). Furthermore, since the top surface 32 is inclined so that the space between the top surface 32 and the lower surface 31 is gradually narrowed, the positions of the plurality of optical fibers 10 held by the tape-shaped resin 13 in the Z direction are determined with higher accuracy as the tape-shaped resin 13 is advanced in the introduction hole 24. Further, since the side surface 33 and the side surface 34 are inclined so that the space between the side surface 33 and the side surface 34 is gradually narrowed, the positions of the plurality of optical fibers 10 held by the tape-shaped resin 13 in the Y direction are determined with high accuracy as the tape-shaped resin 13 is advanced in the introduction hole 24.

In this manner, the positions of the plurality of optical fibers 10 in the YZ plane with respect to the plurality of insertion holes 25 are determined with high accuracy by the lower surface 31, the top surface 32, the side surface 33, and the side surface 34.

The introduction hole 24 further includes a projection 37 protruding from the lower surface 31. A top surface of the projection 37 protrudes upward from the lower surface 31 to a height that does not reach the opening of the insertion hole 25 in the inner wall surface 26. The projection 37 extends linearly in the Y direction at a position adjacent to the inner wall surface 26 in the X direction. The projection 37 is formed integrally with the ferrule 20, for example, and is connected to the inner wall surface 26 in the X direction. The projection 37 may be formed separately from the ferrule 20. The projection 37 includes an abutment surface 37a located opposite the inner wall surface 26 in the X direction.

The abutment surface 37a is away from the inner wall surface 26 in the X direction at the introduction hole 24. That is, the abutment surface 37a is disposed at a position away from the inner wall surface 26 by a predetermined distance in the X direction in the introduction hole 24. Thus, the abutment surface 37a is located between the inner wall surface 26 and the rear end surface 22 in the X direction. The abutment surface 37a is, for example, a flat surface along the Y direction and the Z direction. The abutment surface 37a is formed, for example, perpendicularly to the lower surface 31 and parallel to the inner wall surface 26. When the tape-shaped resin 13 is introduced into the introduction hole 24, the end surface 13a of the tape-shaped resin 13 abuts against the abutment surface 37a in the X direction (see FIGS. 2 and 3). Thus, the position of the optical fiber 10 in the X direction with respect to the insertion hole 25 is determined.

As shown in FIGS. 5 and 6, the plurality of insertion holes 25 are formed in the front portion of the ferrule 20, which is a portion close to the front end surface 21, between the front end surface 21 and the rear end surface 22. The front portion of the ferrule 20 is a portion of the ferrule 20 from the front end surface 21 to the inner wall surface 26. The plurality of insertion holes 25 extend through in the X direction from the front end surface 21 to the inner wall surface 26. The plurality of insertion holes 25 are arranged in the Y direction between the front end surface 21 and the inner wall surface 26 so as to correspond to the plurality of optical fibers 10. The plurality of insertion holes 25 are opened in the front end surface 21 and the inner wall surface 26, and are connected to the introduction hole 24 in the X direction. The plurality of optical fibers 10 introduced into the introduction hole 24 are inserted into the plurality of insertion holes 25, respectively.

Each insertion hole 25 includes a holding part 27 for holding the tip portion 14 of the optical fiber 10 and a tapered portion 28 (introduction portion) for introducing the tip portion 14 of the optical fiber 10 into the holding part 27. The holding part 27 is a circular small-diameter hole extending in the X direction from the front end surface 21. The holding part 27 has a constant inside diameter at each position along the X direction. The inside diameter of the holding part 27 has a size capable of holding the tip portion 14. The inside diameter of the holding part 27 is set so that the clearance between the holding part 27 and the tip portion 14 in the YZ plane is sufficiently small. The holding part 27 is open at the front end surface 21. The tip 10a of the optical fiber 10 inserted into the holding part 27 is exposed from the opening of the front end surface 21 (see FIGS. 2 and 3).

The tapered portion 28 is disposed between the holding part 27 and the inner wall surface 26. The tapered portion 28 extends in the X direction from the holding part 27 to the inner wall surface 26. The tapered portion 28 connects the holding part 27 and the inner wall surface 26 in the X direction. The tapered portion 28 has an inside diameter larger than the inside diameter of the holding part 27. The inside diameter of the tapered portion 28 decreases as the distance from the inner wall surface 26 to the holding part 27 in the X direction decreases. That is, the tapered portion 28 is gradually decreased in diameter as it approaches the holding part 27. The tapered portion 28 is open at the inner wall surface 26. The optical fiber 10 is inserted from the opening of the inner wall surface 26. When the optical fiber 10 is inserted into the insertion hole 25, the tip portion 14 of the optical fiber 10 is guided to the holding part 27 by the tapered portion 28 and is inserted into the holding part 27.

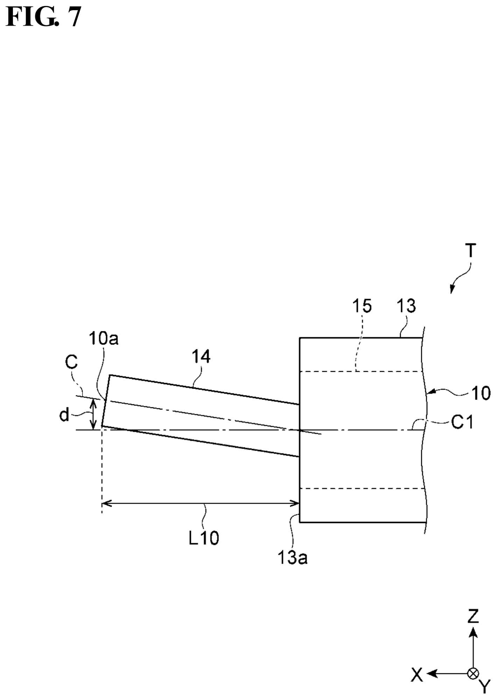

In the present embodiment, a length L of the insertion hole 25 in the X direction is set to be as short as 1.5 mm or less. The length L of the insertion hole 25 corresponds to the distance in the X direction from the front end surface 21 where the front end of the insertion hole 25 is located to the inner wall surface 26 where the rear end of the insertion hole 25 is located. The length L of the insertion hole 25 is the total length of a length L1 of the holding part 27 in the X direction and a length L2 of the tapered portion 28 in the X direction. The length L1 of the holding part 27 is set to be longer than the length L2 of the tapered portion 28, for example. By setting the length L of the insertion hole 25 to be 1.5 mm or less, a length L10 (see FIG. 7) of the optical fiber 10 protruding from the end surface 13a can also be reduced to 1.5 mm at the maximum. When the length L of the insertion hole 25 is shortened, the length L10 of the optical fiber 10 can be shortened as described later. Thus, the misalignment of the tip 10a of the optical fiber 10 can be effectively reduced. The length L of the insertion hole 25 can be measured by cutting the ferrule 20 along the X direction at a cross section including the insertion hole 25 and observing the cross section with a microscope.

However, when the end surface 13a of the tape-shaped resin 13 holding the optical fiber 10 is too close to the inner wall surface 26 in which the insertion hole 25 is formed, the optical fiber 10 may need to be bent sharply between the end surface 13a and the inner wall surface 26 in order to align the optical fiber 10 extending from the end surface 13a with the insertion hole 25. In this case, a large bending stress is applied to the optical fiber 10, and there is a concern that flaw or the like may occur in the optical fiber 10. Thus, in order to reduce the bending stresses applied to the optical fiber 10, it is required to maintain the space between the end surface 13a and the inner wall surface 26, that is, the length of the optical fiber 10 between the end surface 13a and the inner wall surface 26 to some extent.

The abutment surface 37a formed in the introduction hole 24 is used to adjust the space between the end surface 13a and the inner wall surface 26. In a state where the tape-shaped resin 13 is inserted into the introduction hole 24, the end surface 13a abuts against the abutment surface 37a. The space between the end surface 13a and the inner wall surface 26 corresponds to a distance D between the abutment surface 37a and the inner wall surface 26. Thus, by adjusting the distance D according to the position of the abutment surface 37a in the X direction, the length of the optical fiber 10 between the end surface 13a and the inner wall surface 26 can be adjusted. In this manner, the abutment surface 37a functions to adjust the space between the end surface 13a and the inner wall surface 26.

The distance D between the abutment surface 37a and the inner wall surface 26 is set to be, for example, 0.5 mm to 2 mm. By setting the distance D to be 0.5 mm or more, it is possible to effectively reduce the bending stress applied to the optical fiber 10. In order to reduce the bending stress applied to the optical fiber 10 more effectively, the distance D may be set to be 1 mm or more, for example. When the end surface 13a is too far from the inner wall surface 26, the length L10 of the optical fiber 10 becomes long, and thus there is a concern that the misalignment of the tip 10a of the optical fiber 10 may become large due to the influence of the manufacturing tolerance between the optical fiber 10 and the tape-shaped resin 13. Thus, in order to reduce the misalignment of the tip 10a of the optical fiber 10, the distance D is set to be 2 mm or less. In order to more effectively reduce the misalignment of the tip 10a, the distance D may be set to be 1.5 mm or less. The distance D can be measured by cutting the ferrule 20 along the X direction at a cross section including the abutment surface 37a and the inner wall surface 26 and observing the cross section with a microscope.

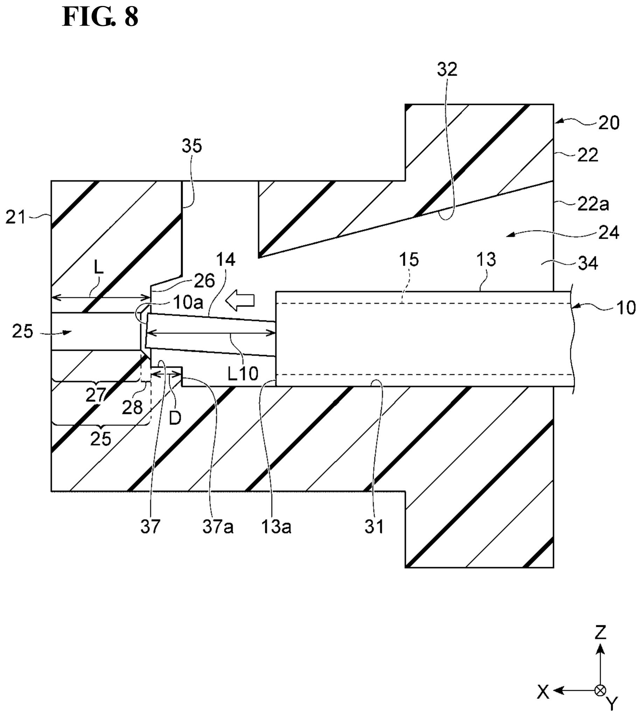

A total length L + D of the length L of the insertion hole 25 and the distance D from the inner wall surface 26 to the abutment surface 37a corresponds to the length L10 of the optical fiber 10 protruding from the end surface 13a of the tape-shaped resin 13. In the present embodiment, the total length L + D including the distance D is 3.5 mm at the maximum, and thus the length L10 of the optical fiber 10 can also be set to be 3.5 mm or less. When the optical fiber 10 can be shortened in this manner, the misalignment of the tip 10a of the optical fiber 10 can be sufficiently reduced. The reason for this will be described below with reference to FIGS. 7 and 8.

FIG. 7 is a side view of the tape fiber T including the optical fiber 10. FIG. 8 is a view showing a state in which the tape fiber T is mounted on the ferrule 20. As described above, the longer the length L10 of the optical fiber 10 from the end surface 13a, the larger the positional deviation of the tip 10a of the optical fiber 10. The positional deviation of the tip 10a can be represented by a distance d (see FIG. 8) of the tip 10a from a center axis C1 of the insertion hole of the tape-shaped resin 13 into which the optical fiber 10 is inserted. Thus, the longer the length L10, the larger the distance d. In particular, in the configuration in which the optical fiber 10 is held by the tape-shaped resin 13 as in the present embodiment, the work of removing the tape-shaped resin 13 is required in order to expose the tip portion 14 of the optical fiber 10 from the tape-shaped resin 13. Thus, the tip 10a is likely to be displaced during this operation, and the distance d is likely to be large.

As described above, the distance d depends on the length L10 of the optical fiber 10, and thus, when the length L10 of the optical fiber 10 can be set to 3.5 mm or less, the distance d can be set to, for example, 100 µm or less. In contrast, since the inside diameter of the holding part 27 is 200 µm or less, when the distance d can be held to be small as described above, even when the optical fiber 10 is advanced in a state where the insertion hole 25 and the optical fiber 10 are axially aligned, the tip portion 14 of the optical fiber 10 can be reduced from strongly contacting the tapered portion 28 or the like. Thus, by setting the total length L + D to be as short as 3.5 mm or less, the positional deviation of the tip 10a of the optical fiber 10 can be sufficiently reduced. In order to further reduce the total length L + D and further reduce the positional deviation of the tip 10a of the optical fiber 10, the length L of the insertion hole 25 may be set to be short, for example, one mm or less. In addition, in consideration of the accuracy of forming the insertion hole 25, the length L of the insertion hole 25 may be set to, for example, 0.5 mm or more. Thus, the length L of the insertion hole 25 may be set to be, for example, 0.5 mm to 1.5 mm. The length L of the insertion hole 25 may be set to a shorter range, for example, a range of 0.5 mm to 1 mm.

When the distance d can be held to be small as described above, it is possible to reduce the possibility that the tip portion 14 is inserted into the insertion hole 25 in a state where the posture of the tip portion 14 of the optical fiber 10 is largely inclined. As shown in FIG. 8, when the tape-shaped resin 13 is advanced in a state where the tape-shaped resin 13 holding the optical fiber 10 is inserted into the ferrule 20, the tip portion 14 of the optical fiber 10 can be inserted into the holding part 27 without strongly contacting the tapered portion 28 and the like.

When the tape-shaped resin 13 is inserted into the introduction hole 24, the optical fiber 10 held by the tape-shaped resin 13 is positioned with high accuracy by the lower surface 31, the top surface 32, the side surface 33, and the side surface 34 of the introduction hole 24. When the length L10 of the optical fiber 10 is shortened, the rigidity of the optical fiber 10 is increased. Thus, when the optical fiber 10 and the insertion hole 25 are largely misaligned, the optical fiber 10 may be strongly flawed by contact with the insertion hole 25 or the like. Thus, the lower surface 31, the top surface 32, the side surface 33, and the side surface 34 for accurately positioning the optical fiber 10 are provided as the positioning mechanism, and thus it is possible to avoid the occurrence of such flaw to the optical fiber.

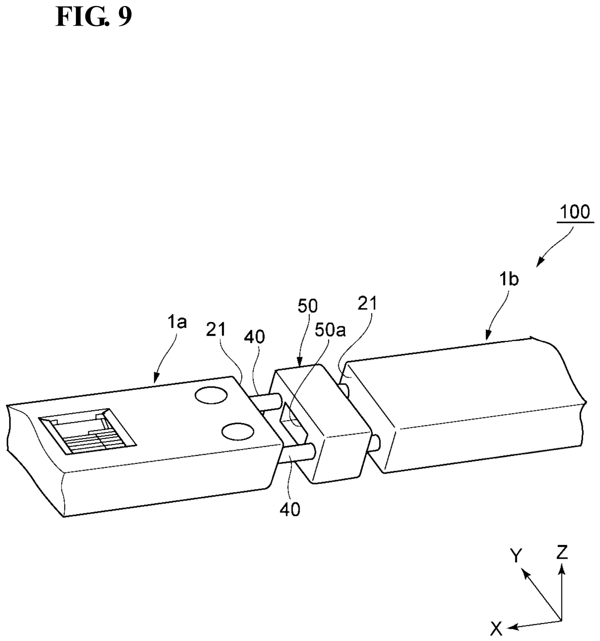

FIG. 9 is a perspective view of an optical coupling structure 100 according to the present embodiment. The optical coupling structure 100 includes a first optical connector 1a, a second optical connector 1b, a pair of guide pins 40, 40, and a spacer 50. The first optical connector 1a and the second optical connector 1b have the same configuration as the optical connector 1 described above. In the optical coupling structure 100, the front end surface 21 of the first optical connector 1a and the front end surface 21 of the second optical connector 1b face each other in the X direction with a gap therebetween. The pair of guide pins 40, 40 engage with the pair of guide holes 23, 23 of the first optical connector 1a and the pair of guide holes 23, 23 of the second optical connector 1b. Thus, the positions of the first optical connector 1a and the second optical connector 1b in the YZ plane are defined.

The spacer 50 is a plate-like member having an opening 50a. The spacer 50 is disposed between the front end surface 21 of the first optical connector 1a and the front end surface 21 of the second optical connector 1b. The opening 50a allows a plurality of optical paths extending between the first optical connector 1a and the second optical connector 1b to pass therethrough. Thus, the first optical connector 1a and the second optical connector 1b are optically coupled. The spacer 50 abuts against the front end surface 21 of the first optical connector 1a and the front end surface 21 of the second optical connector 1b. Thus, a gap between the first optical connector 1a and the second optical connector 1b in the X direction is defined.

The effects obtained by the ferrule 20, the optical connector 1, and the optical coupling structure 100 according to the present embodiment described above will be described together with the problems of the comparative example.

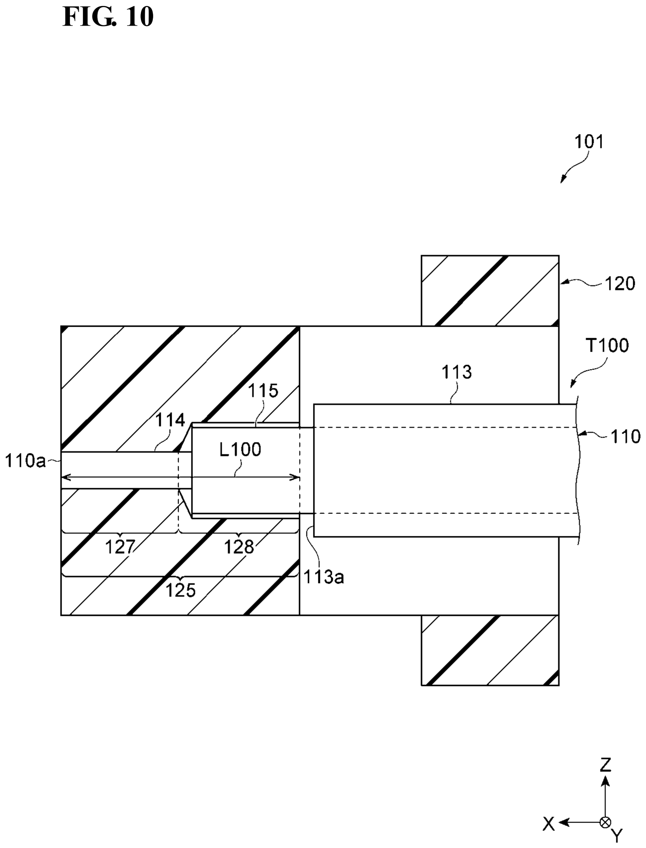

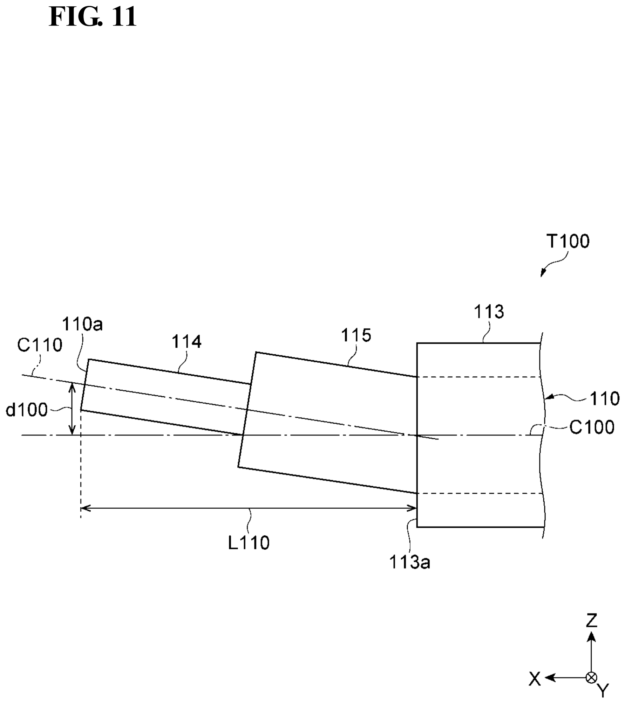

FIG. 10 is a cross-sectional view of an optical connector 101 according to a comparative example. FIG. 11 is a side view showing a tape fiber T100 provided in the optical connector 101. As shown in FIG. 10, in the optical connector 101, a length L100 of a insertion hole 125 of a ferrule 120 is set to be, for example, four mm or more. The insertion hole 125 includes a holding part 127 into which a tip portion 114 of an optical fiber 110 of the tape fiber T100 is inserted and an introduction portion 128 into which a covering portion 115 of the optical fiber 110 is inserted.

When the length L100 of the insertion hole 125 is set to be long, as shown in FIG. 11, a length L110 of the optical fiber 110 from an end surface 113a of a tape-shaped resin 113 also becomes long, and accordingly, the deviation of a center axis C110 of the optical fiber 110 with respect to a center axis C100 of the insertion hole of the tape-shaped resin 113, that is, the misalignment (distance d100) of a tip 110a of the optical fiber 110 with respect to the center axis C 100 also becomes large. When the misalignment of the tip 110a is increased in this manner, the optical fiber 110 is inserted into the insertion hole 125 in a state where the posture of the optical fiber 110 is largely inclined. Thus, the optical fiber 110 is highly likely to come into strong contact with the insertion hole 125.

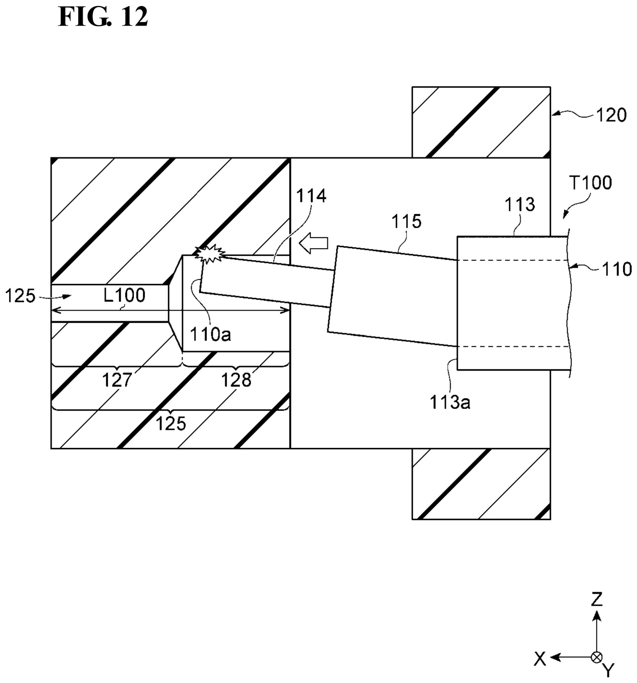

FIG. 12 is a cross-sectional view showing a state in which the tape fiber T100 is mounted on the ferrule 120. As shown in FIG. 12, when the optical fiber 110 is advanced in a state where the tip 110a of the optical fiber 110 is largely misaligned, the tip portion 114 of the optical fiber 110 strongly contacts the introduction portion 128 of the insertion hole 125, and the optical fiber 110 is twisted and rotated by friction between the tip portion 114 and the introduction portion 128. As a result, an angular deviation (rotational deviation) in the rotational direction of the optical fiber 110 occurs. Such a rotational deviation may cause a misalignment of the core in the tip 110a of the optical fiber 110, and may cause a change in the installation state of the optical fiber 110. Such a change in the installation state of the optical fiber 110 may cause deterioration of optical characteristics such as an increase in connection loss.

When the length L of the insertion hole 25 is set to be as short as 1.5 mm or less as in the present embodiment, the length L10 of the optical fiber 10 from the end surface 13a of the tape-shaped resin 13 can be shortened. Thus, the positional deviation of the tip 10a of the optical fiber 10 can also be reduced (see FIG. 8). Thus, the tip portion 14 can be inserted into the insertion hole 25 in a state in which the inclination of the posture of the tip portion 14 of the optical fiber 10 is suppressed. Thus, it is possible to reduce the occurrence of changes in the installation state, such as twisting and rotation of the optical fiber 10, due to friction between the insertion hole 25 and the tip portion 14. As a result, it is possible to reduce the occurrence of deterioration in optical characteristics such as an increase in connection loss due to a change in the installation state of the optical fiber 10.

As in the present embodiment, the insertion hole 25 may include the tapered portion 28 having a diameter that is gradually decreased from the inner wall surface 26 toward the holding part 27. In this case, the tip portion 14 can be easily inserted into the holding part 27. Further, in this configuration, the length L of the insertion hole 25 can be made shorter than in a configuration in which the insertion hole 25 has another portion between the tapered portion 28 and the inner wall surface 26. Thus, in this configuration, the misalignment of the tip of the optical fiber 10 can be reduced to be smaller. This makes it possible to more effectively reduce the occurrence of the change in the installation state of the optical fiber 10.

As in the present embodiment, the introduction hole 24 may include the abutment surface 37a where the tape-shaped resin 13 introduced from the rear end surface 22 abuts in the X direction. When the distance from the tape-shaped resin 13 to the inner wall surface 26 is too short, the optical fiber 10 between the tape-shaped resin 13 and the inner wall surface 26 is likely to be bent sharply for axial alignment between the optical fiber 10 protruding from the tape-shaped resin 13 and the insertion hole 25 of the inner wall surface 26. As in the above-described configuration, when the abutment surface 37a is formed at a position away from the inner wall surface 26, the space between the end surface 13a of the tape-shaped resin 13 and the inner wall surface 26 can be maintained. Thus, it is possible to reduce the occurrence of a sharp bend in the optical fiber 10 between the end surface 13a and the inner wall surface 26. This can reduce the application of excessive bending stress to the optical fiber 10.

As in the present embodiment, the distance D between the inner wall surface 26 and the abutment surface 37a in the X direction may be 0.5 mm to 2 mm. By setting the distance D to be 0.5 mm or more, it is possible to more reliably reduce the occurrence of a sharp bend in the optical fiber 10. Thus, it is possible to more reliably reduce the application of excessive bending stress to the optical fiber 10. Furthermore, by setting the distance D to be two mm or less, it is possible to reduce the length L10 of the tip portion 14 of the optical fiber 10 from the end surface 13a of the tape-shaped resin 13 from being excessively long. As a result, it is possible to more reliably reduce the occurrence of a change in the installation state of the optical fiber 10 when the optical fiber 10 is mounted on the ferrule 20.

As in the present embodiment, the top surface 32 may be inclined with respect to the lower surface 31 such that the space between the top surface 32 and the lower surface 31 narrows toward the inner wall surface 26. In this case, when the tape-shaped resin 13 is inserted into the introduction hole 24, the optical fiber 10 held by the tape-shaped resin 13 can be easily guided to the insertion hole 25 by advancing the tape-shaped resin 13 along the top surface 32 and the lower surface 31. At the same time, the position of the optical fiber 10 with respect to the insertion hole 25 can be determined with high accuracy. This makes it possible to more reliably reduce the occurrence of a change in the installation state of the optical fiber 10 when the optical fiber 10 is mounted on the ferrule 20.

As in the present embodiment, the side surface 33 and the side surface 34 may be inclined with respect to the XZ plane such that the space between the side surface 33 and the side surface 34 narrows toward the inner wall surface 26. In this case, when the tape-shaped resin 13 is inserted into the introduction hole 24, the optical fiber 10 held by the tape-shaped resin 13 can be easily guided to the insertion hole 25 by advancing the tape-shaped resin 13 along the side surface 33 and the side surface 34. At the same time, the position of the optical fiber 10 with respect to the insertion hole 25 can be determined with high accuracy. This makes it possible to more reliably reduce the occurrence of a change in the installation state of the optical fiber 10 when the optical fiber 10 is mounted on the ferrule 20.

As in the present embodiment, the tape-shaped resin 13 may be a resin layer that collectively surrounds only the covering portions 15 in a bundle among the tip portions 14 and the covering portions 15 of the plurality of optical fibers 10. In this case, the covering portion 15 of the optical fiber 10 having a relatively high strength is held by the tape-shaped resin 13, and thus it is possible to reduce the occurrence of flaw to the optical fiber 10 due to stress concentration on the boundary between the tape-shaped resin 13 and the optical fiber 10 can be reduced.

As in the present embodiment, each of the plurality of optical fibers 10 may be any one of a multi-core fiber, a polarization maintaining fiber, and a bundle fiber. When such the optical fiber 10 is used, the optical fiber 10 needs to be rotationally aligned. Thus, the change in the installation state, such as the twisting and rotation of the optical fiber 10, due to the friction between the insertion hole 25 and the tip portion 14 is likely to be a problem. In contrast, the optical connector 1 can reduce such a change in the installation state of the optical fiber 10, and thus can effectively achieve the above-described effect.

The ferrule 20, the optical connector 1, and the optical coupling structure 100 according to the present disclosure are not limited to the above-described embodiments. The ferrule 20, the optical connector 1, and the optical coupling structure 100 according to the present disclosure may be modified in specific aspects without departing from the scope of the claims.

### <Modification 1>

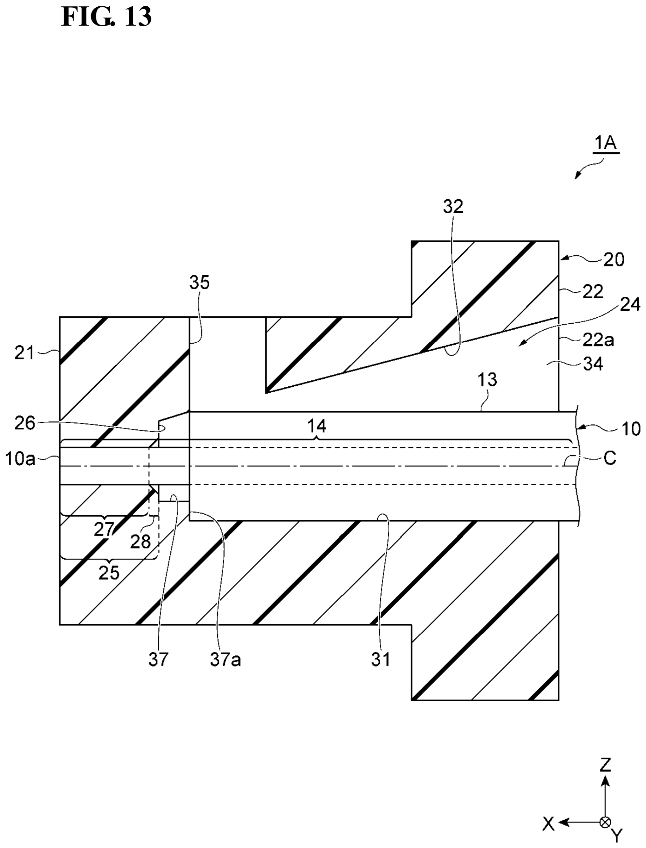

FIG. 13 is a cross-sectional view of an optical connector 1A according to modification 1. In the optical connector 1A, the tape-shaped resin 13 collectively surrounds only the tip portions 14 in a bundle among the tip portions 14 and the covering portions 15 of the optical fibers 10. In this case, a part of each of the tip portion 14 protrudes from the end surface 13a of the tape-shaped resin 13, and the remaining part of each of the tip portion 14 is covered with the tape-shaped resin 13. The covering portions 15 are located, for example, rearward of the tape-shaped resin 13. In this manner, even when only the tip portions 14 of the optical fibers 10 are held by the tape-shaped resin 13, the same or similar effect as that of the above-described embodiment can be obtained. Furthermore, in the optical connector 1A, since the clearance between the tape-shaped resin 13 and the tip portion 14 can be made relatively small, the misalignment of the tip of the optical fiber 10 can be made smaller. This makes it possible to more reliably reduce the occurrence of a change in the installation state of the optical fiber 10 when the optical fiber 10 is mounted on the ferrule 20.

### <Modification 2>

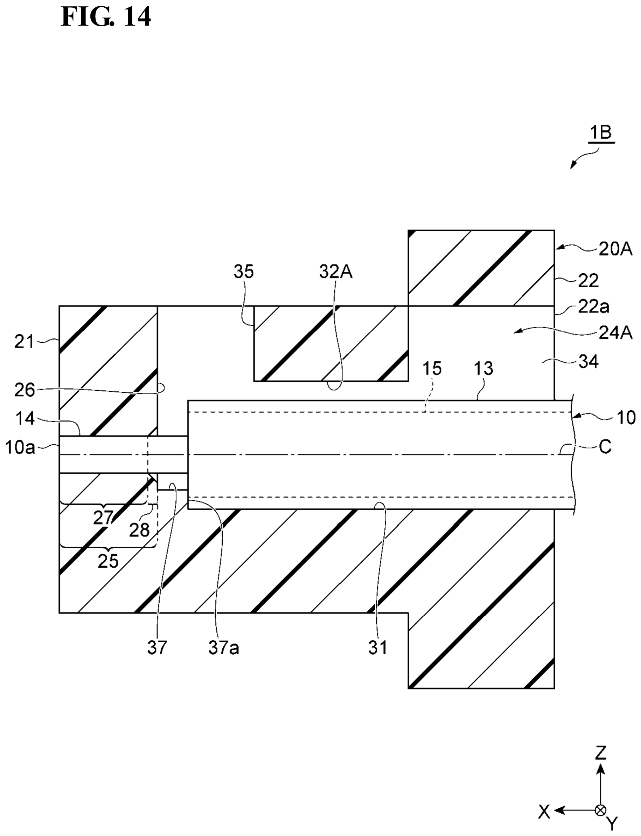

FIG. 14 is a cross-sectional view of an optical connector 1B according to modification 2. In a ferrule 20A of the optical connector 1B, a top surface 32A of an introduction hole 24A extends in parallel to the lower surface 31 without being inclined. That is, the top surface 32A extends along the X direction and the Y direction between the inner wall surface 26 and the rear end surface 22, similarly to the lower surface 31. The top surface 32A is, for example, a flat surface parallel to the XY plane, and is formed perpendicular to the inner wall surface 26 and the rear end surface 22. The side surface 33 and the side surface 34 may be inclined with respect to the XZ plane such that the space between the side surface 33 and the side surface 34 in the Y direction narrows toward the inner wall surface 26 as in the above-described embodiment (see FIG. 6). Even in such a form, the same or similar effect as that of the above-described embodiment can be obtained.

### <Modification 3>

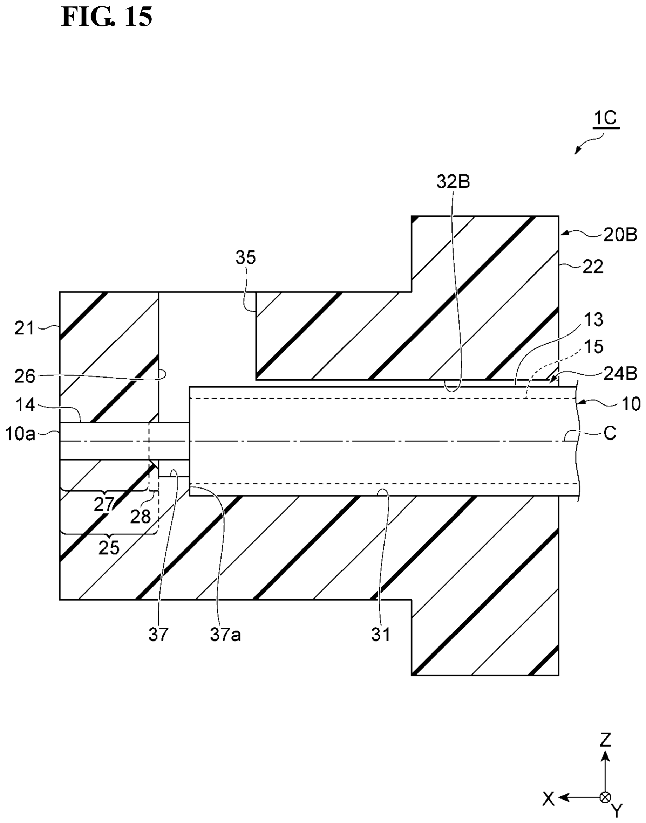

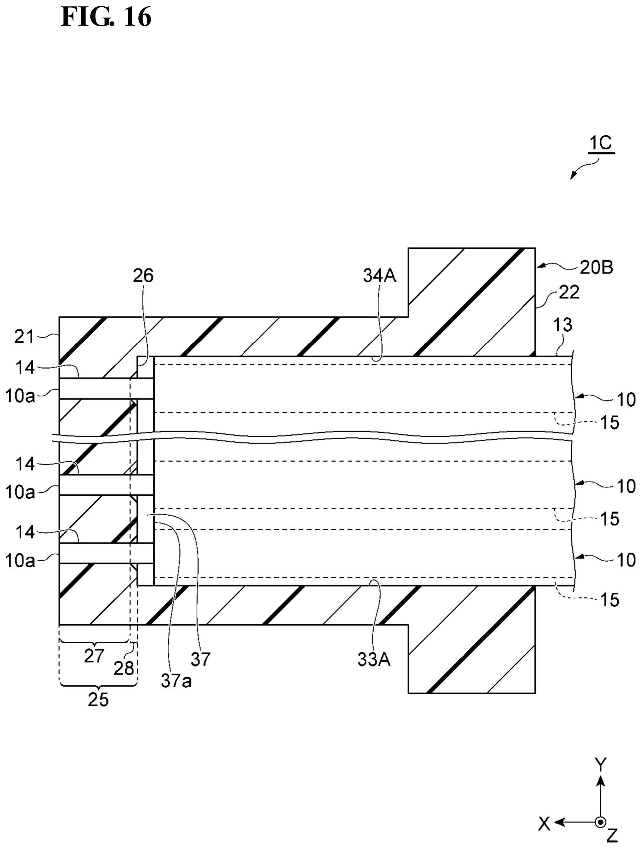

FIG. 15 is a cross-sectional view of an optical connector 1C according to modification 3. FIG. 16 is another cross-sectional view of the optical connector 1C. In a ferrule 20B of the optical connector 1C, a top surface 32B, a side surface 33A, and a side surface 34A of an introduction hole 24B extend in the X direction without being inclined. As shown in FIG. 15, the top surface 32B extends in parallel with the lower surface 31, for example. The space between the top surface 32B and the lower surface 31 in the Z direction is constant at each position along the X direction. The space between the top surface 32B and the lower surface 31 in the Z direction is set to be slightly larger than the width of the tape-shaped resin 13 in the Z direction so that the tape-shaped resin 13 holding the optical fiber 10 can be positioned in the Z direction.

As shown in FIG. 16, the side surface 33A and the side surface 34A are, for example, flat surfaces along the XZ plane, and extend in parallel to each other. The side surface 33A and the side surface 34A are formed, for example, perpendicular to the inner wall surface 26 and the rear end surface 22. The space between the side surface 33A and the side surface 34A in the Y direction is constant at each position along the X direction. The space between the side surface 33A and the side surface 34A in the Y direction is set to be slightly larger than the width of the tape-shaped resin 13 in the Y direction so that the tape-shaped resin 13 holding the optical fiber 10 can be positioned in the Y direction. Thus, the lower surface 31, the top surface 32B, the side surface 33A, and the side surface 34A can function as a positioning mechanism for determining the position of the optical fiber 10 in the YZ plane. Even in such a form, the same or similar effect as that of the above-described embodiment can be obtained.

### <Modification 4>

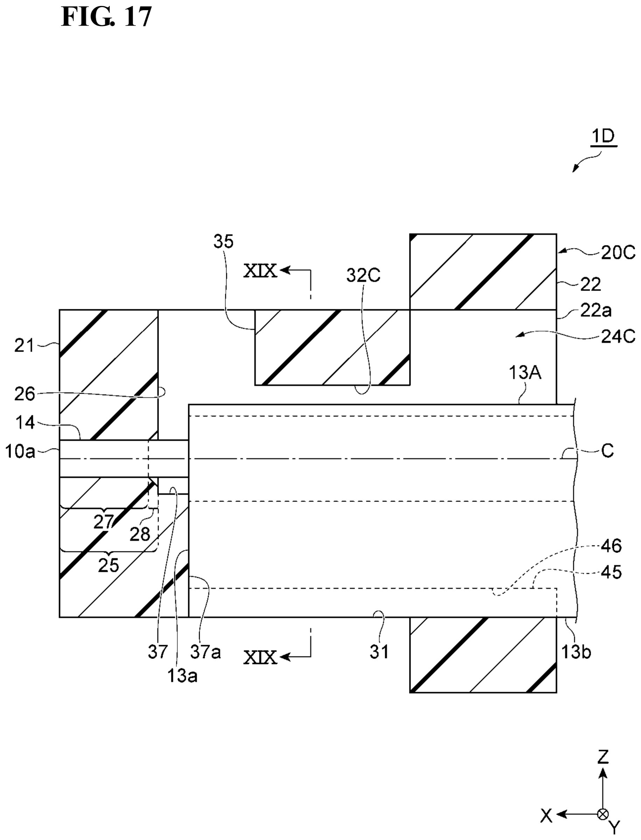

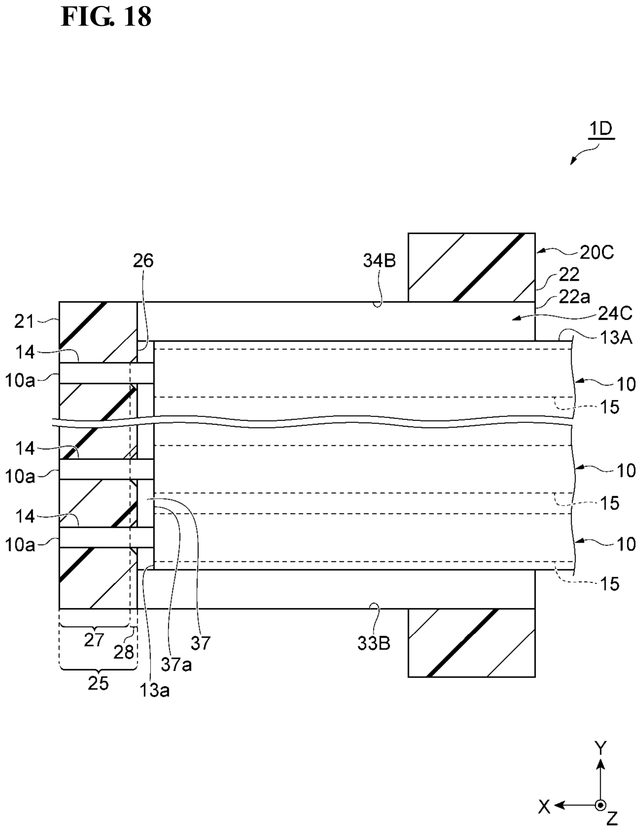

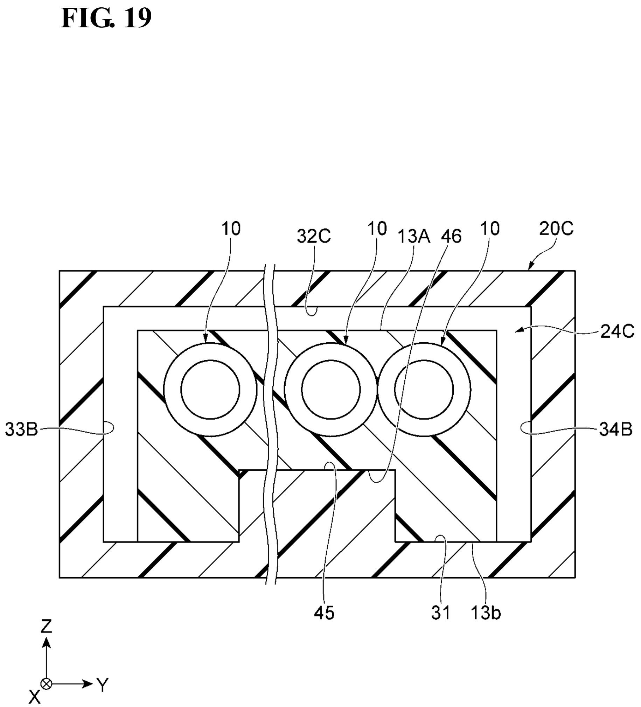

FIG. 17 is a cross-sectional view of an optical connector 1D according to modification 4. FIG. 18 is another cross-sectional view of the optical connector 1D. FIG. 19 is a cross-sectional view of the optical connector 1D taken along line XIX-XIX of FIG. 17. In a ferrule 20C of the optical connector 1D, an introduction hole 24C includes a protruding portion 45 on the lower surface 31. A top surface 32C, a side surface 33B, and a side surface 34B of the introduction hole 24C extend in the X direction without being inclined. The top surface 32C extends, for example, parallel to the lower surface 31. The space between the top surface 32B and the lower surface 31 in the Z direction is constant at each position along the X direction. The side surface 33B and the side surface 34B extend, for example, in parallel to each other. The space between the side surface 33B and the side surface 34B in the Y direction is constant at each position along the X direction.

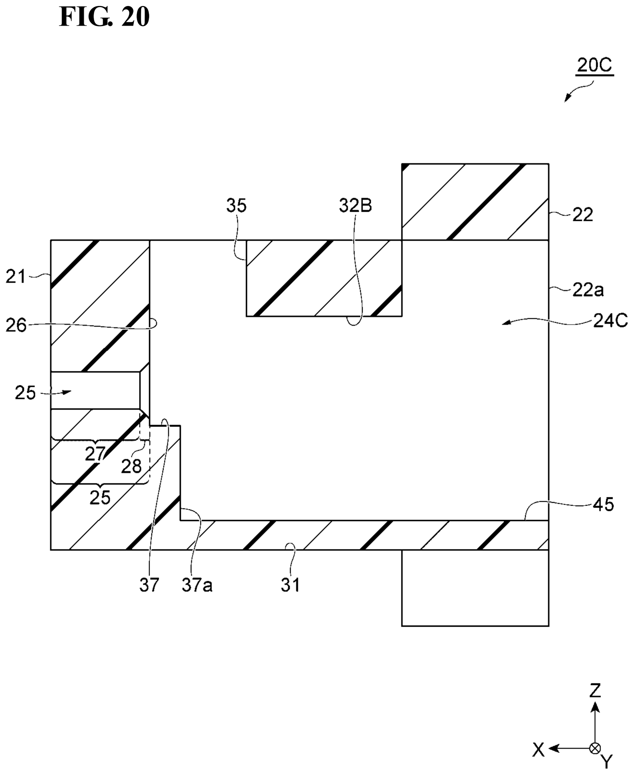

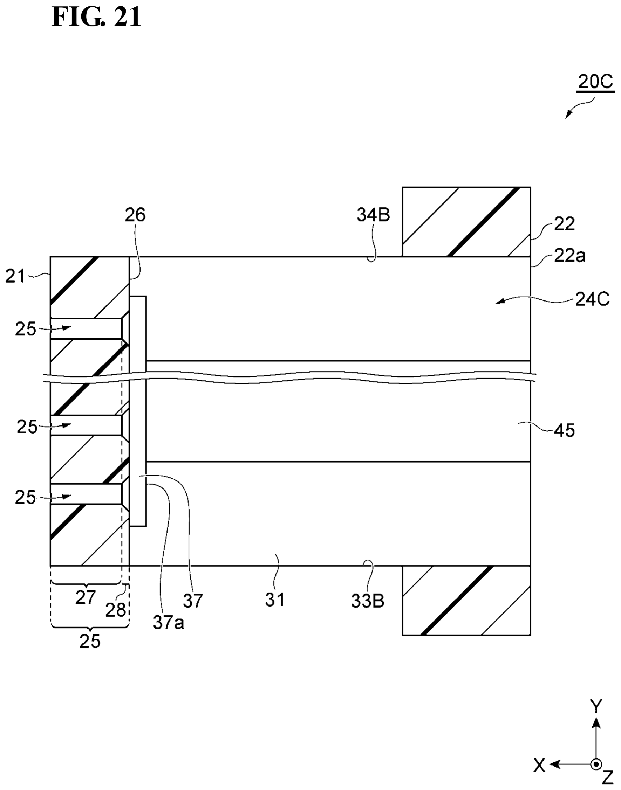

FIG. 20 is a cross-sectional view of the ferrule 20C. FIG. 21 is another cross-sectional view of the ferrule 20C. As shown in FIGS. 20 and 21, the protruding portion 45 protrudes upward from the lower surface 31 toward the top surface 32C. The height of the top surface of the protruding portion 45 from the lower surface 31 is lower than the height of the top surface of the projection 37 from the lower surface 31. The protruding portion 45 extends linearly in the X direction from the abutment surface 37a of the projection 37 to the rear end surface 22 at the center of the lower surface 31 in the Y direction. The width of the protruding portion 45 in the Y direction is smaller than the width of the projection 37 in the Y direction, for example. As shown in FIG. 19, for example, the protruding portion 45 has a rectangular shape when viewed in the X direction. A tape-shaped resin 13A holding the optical fiber 10 includes a recess 46 engageable with the protruding portion 45 at a bottom surface 13b. The recess 46 extends linearly in the X direction from the end surface 13a in the bottom surface 13b.

As shown in FIGS. 17 and 19, when the tape-shaped resin 13A holding the optical fiber 10 is inserted into the ferrule 20C, the recess 46 of the tape-shaped resin 13A engages with the protruding portion 45 of the introduction hole 24C, whereby the position of the tape-shaped resin 13A in the introduction hole 24C in the YZ plane, that is, the position of the optical fiber 10 with respect to the insertion hole 25 in the YZ plane is determined. In a state where the recess 46 engages with the protruding portion 45, the tape-shaped resin 13A is advanced until the end surface 13a of the tape-shaped resin 13A abuts against the abutment surface 37a, whereby the optical fiber 10 is positioned with respect to the insertion hole 25. Thus, the protruding portion 45 and the recess 46 can function as a positioning mechanism for determining the position of the optical fiber 10 in the YZ plane.

Even in such a form, the same or similar effect as that of the above-described embodiment can be obtained. That is, in the optical connector 1D, when the tape-shaped resin 13A is inserted into the introduction hole 24C, the tape-shaped resin 13A is advanced along the protruding portion 45 and the recess 46, so that the optical fiber 10 held by the tape-shaped resin 13A can be easily guided to the insertion hole 25. At the same time, the position of the optical fiber 10 with respect to the insertion hole 25 can be determined with high accuracy. This makes it possible to more reliably reduce the occurrence of a change in the installation state of the optical fiber 10 when the optical fiber 10 is mounted on the ferrule 20C.

### <Modification 5>

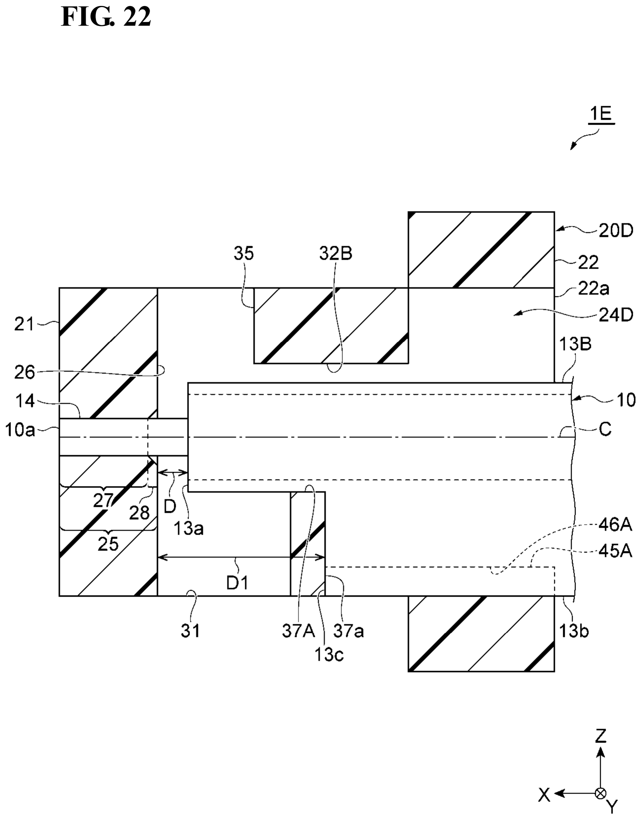

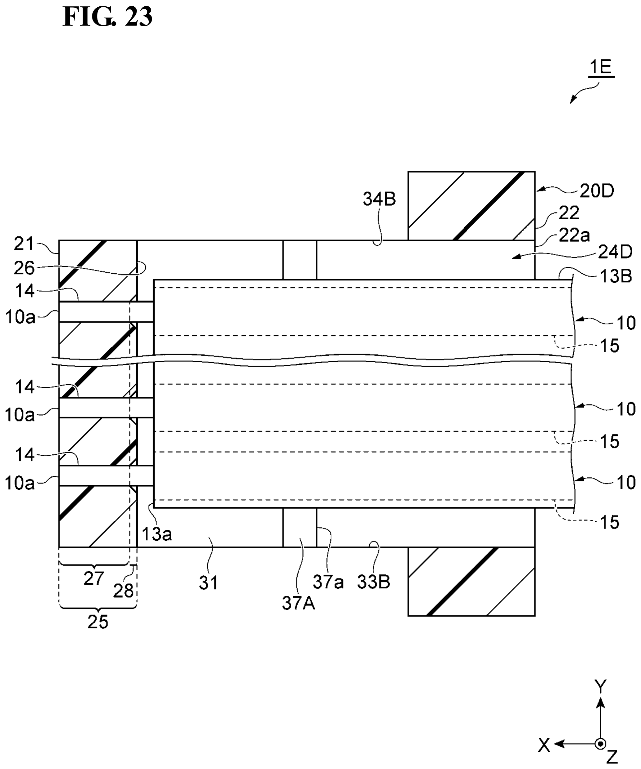

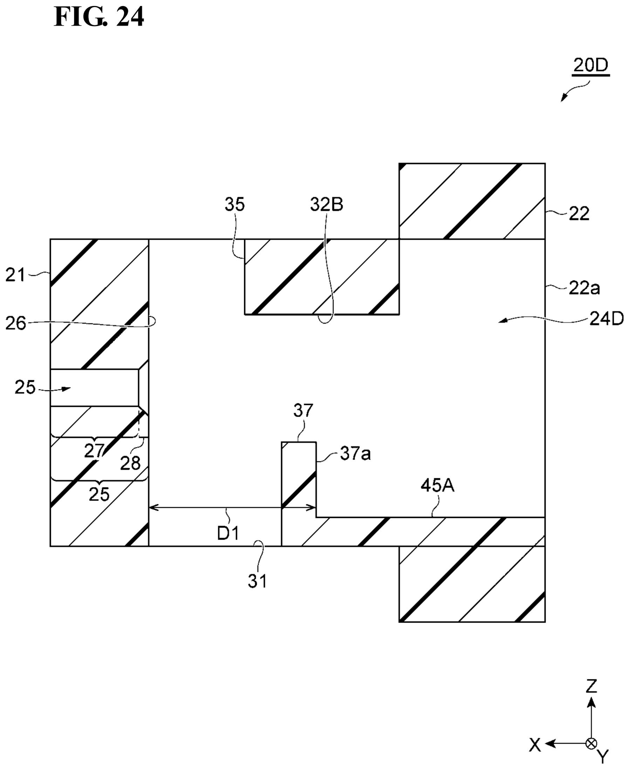

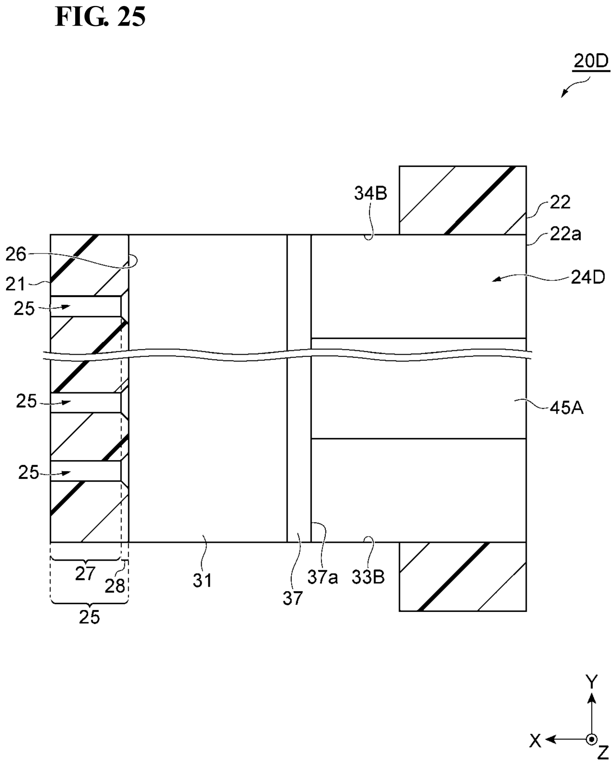

FIG. 22 is a cross-sectional view of an optical connector 1E according to modification 5. FIG. 23 is another cross-sectional view of the optical connector 1E. FIG. 24 is a cross-sectional view of a ferrule 20D of the optical connector 1E. FIG. 25 is another cross-sectional view of the ferrule 20D. The optical connector 1E has a configuration in which the arrangement of the projection 37 of the optical connector 1D is changed. In the optical connector 1E, a projection 37A is formed at a position away from the inner wall surface 26 in the X direction in an introduction hole 24D. That is, the projection 37A is positioned offset from the inner wall surface 26 in the X direction between the inner wall surface 26 and the rear end surface 22. As shown in FIG. 25, the projection 37A extends linearly in the Y direction from the side surface 33B to the side surface 34B at the center of the lower surface 31 in the X direction, for example. A protruding portion 45A extends linearly in the X direction from the abutment surface 37a of the projection 37A to the rear end surface 22.

As shown in FIG. 22, a tape-shaped resin 13B holding the optical fiber 10 includes a recess 46A engageable with the protruding portion 45A at the bottom surface 13b. The recess 46A extends linearly in the X direction from the end surface 13a on the bottom surface 13b of the tape-shaped resin 13B. As shown in FIGS. 22 and 23, a step surface 13c which is recessed rearward from the end surface 13a is formed on the tape-shaped resin 13B which holds the optical fiber 10. The step surface 13c is, for example, a flat surface along the YZ plane. The step surface 13c is formed, for example, between the optical fiber 10 and the lower surface 31 in the Z direction.

When the tape-shaped resin 13B holding the optical fiber 10 is inserted into the introduction hole 24D, the step surface 13c moves in the X direction and abuts against the abutment surface 37a. In the state where the step surface 13c abuts against the abutment surface 37a, the space between the end surface 13a and the inner wall surface 26 is set to the distance D. As described above, the distance D is, for example, 0.5 mm to 2 mm. The space between the abutment surface 37a and the inner wall surface 26 is set to a distance D1. The distance D1 is set to a magnitude obtained by adding the distance in the Z direction from the end surface 13a to the step surface 13c to the distance D. Thus, the distance D between the end surface 13a and the inner wall surface 26 can be adjusted by adjusting the distance D1 between the abutment surface 37a and the inner wall surface 26. That is, the abutment surface 37a functions to adjust the space (distance D) between the end surface 13a and the inner wall surface 26, as in the above-described embodiment.

As described above, the abutment surface 37a is not necessarily configured to abut against the end surface 13a of the tape-shaped resin 13B, and may be configured to abut against another portion such as the step surface 13c of the tape-shaped resin 13B. Even in this case, the distance D can be managed with high accuracy to maintain the space between the end surface 13a and the inner wall surface 26. As a result, it is possible to reduce the occurrence of a sharp bend in the optical fiber 10 between the end surface 13a and the inner wall surface 26 due to the axial alignment between the optical fiber 10 and the insertion hole 25. This can reduce the case of excessive bending stress being applied to the optical fiber 10.

### <Modification 6>

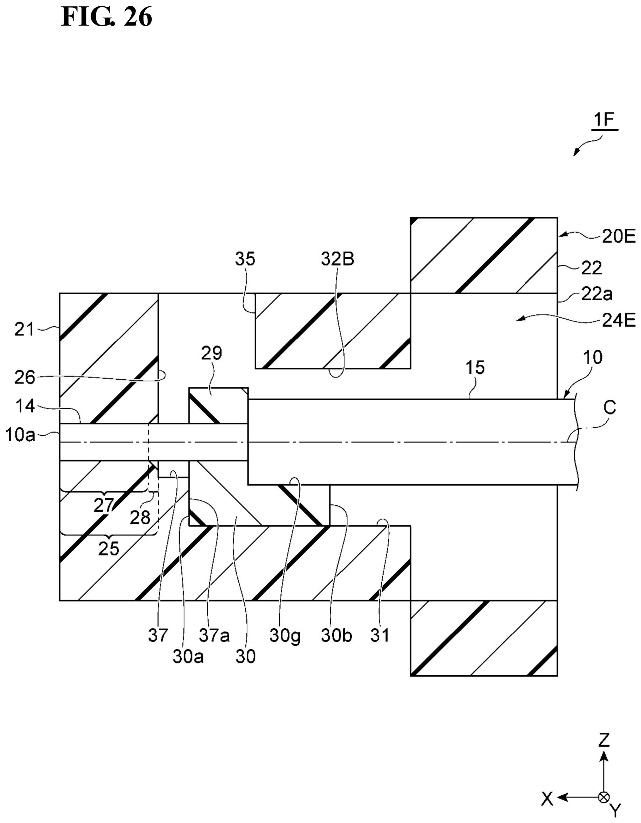

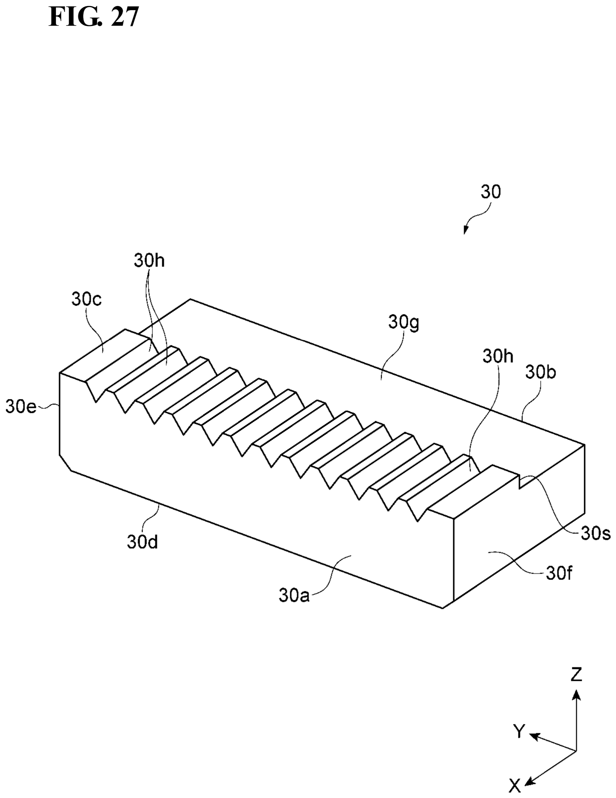

FIG. 26 is a cross-sectional view of an optical connector 1F according to modification 6. FIG. 27 is a perspective view of an optical-fiber support member 30 (support member) provided in the optical connector 1F. As shown in FIGS. 26 and 27, the optical connector 1F includes the optical-fiber support member 30 instead of the tape-shaped resin 13. The optical-fiber support member 30 is a member that holds the plurality of optical fibers 10 in an introduction hole 24E of a ferrule 20E. The optical-fiber support member 30 is made of a material such as resin or metal. The optical-fiber support member 30 includes, for example, a front end surface 30a, a rear end surface 30b, a top surface 30c, a lower surface 30d, a side surface 30e, and a side surface 30f. The front end surface 30a and the rear end surface 30b are, for example, planes along the YZ plane, and are arranged side by side along the X direction. The top surface 30c and the lower surface 30d are, for example, planes along the XY plane, and are arranged side by side along the Z direction. The side surface 30e and the side surface 30f are, for example, planes along the XZ plane, and are arranged side by side along the Y direction.

The optical-fiber support member 30 includes a fixation surface 30g for collectively fixing the covering portions 15 of the plurality of optical fibers 10 at a portion close to the rear end surface 30b in the X direction. The fixation surface 30g is, for example, a plane along the XY plane, and forms a step with respect to the top surface 30c. The fixation surface 30g and the top surface 30c are connected to each other via a step surface 30s. The step surface 30s is, for example, a plane along the YZ plane, and is formed perpendicular to the fixation surface 30g and the top surface 30c. The fixation surface 30g extends from the step surface 30s to the rear end surface 30b in the X direction. The optical-fiber support member 30 includes a plurality of V grooves 30h for holding the tip portions 14 of the plurality of optical fibers 10, respectively, in a portion close to the front end surface 30a in the X direction. The plurality of V grooves 30h are formed on the top surface 30c. The plurality of V grooves 30h extend in the X direction from the front end surface 30a to the step surface 30s on the top surface 30c and are arranged along the Y direction.

As shown in FIG. 26, the tip portions 14 of the plurality of optical fibers 10 are respectively placed on the plurality of V grooves 30h, and the covering portions 15 of the plurality of optical fibers 10 are placed on the fixation surface 30g. The tip portion 14 is placed on each of the V grooves 30h, whereby the position of the optical fiber 10 in the YZ plane with respect to the optical-fiber support member 30 is defined. In a state where the tip portion 14 is placed on the V groove 30h, the optical fiber 10 is rotationally aligned. Each of the V grooves 30h is configured to hold the tip portion 14 rotatably around the center axis C. In a state where all the optical fibers 10 which have been subjected to the rotational alignment are placed on the V grooves 30h, respectively, an adhesive is applied onto the optical fibers 10, and the tip portions 14 are pressed against the V grooves 30h by a cover 29 in the form of a rectangular plate provided on the tip portion 14. In this state, the adhesive is cured, and thus the tip portions 14 are fixed to the V grooves 30h by means of the adhesive. Similarly, the covering portions 15 are fixed to the fixation surface 30g by means of an adhesive. Thus, the optical-fiber support member 30 that holds the plurality of optical fibers 10 is obtained.

Even in such a form, the same or similar effect as that of the above-described embodiment can be obtained. Further, in the optical connector 1F, the optical-fiber support member 30 is disposed inside the ferrule 20E in a state where the plurality of optical fibers 10 that have been subjected to rotational alignment are placed and fixed in the plurality of V grooves 30h of the optical-fiber support member 30, respectively, and thus the tip portion 14 of the optical fiber 10 can be inserted into the insertion hole 25 in a state where the posture of the optical fiber 10 is along the X direction. This can more reliably reduce the occurrence of friction between the insertion hole 25 and the tip portion 14, and can facilitate the mounting operation of the optical fiber 10 on the ferrule 20A. Further, the optical-fiber support member 30 holds both the tip portion 14 and the covering portion 15, and thus the posture of the optical fiber 10 can be further stabilized.

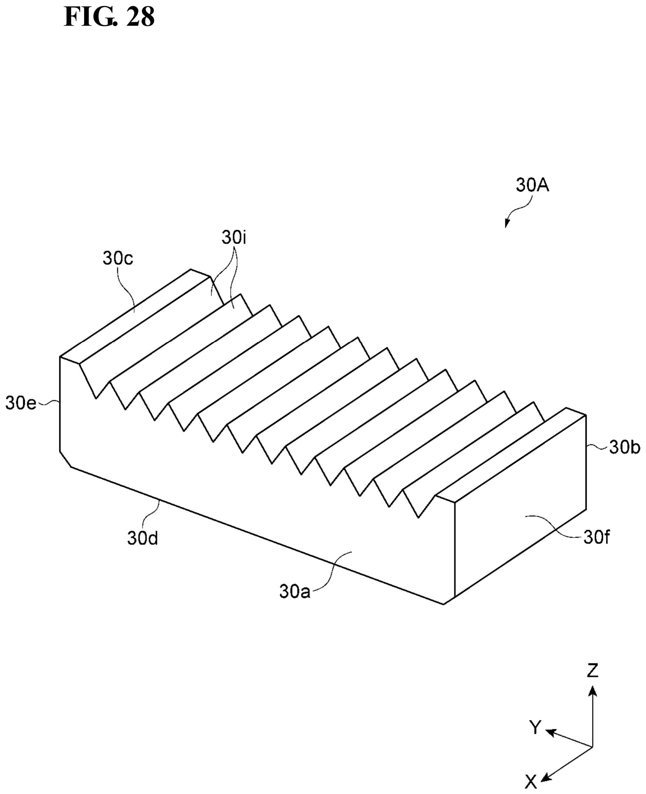

FIG. 28 is a perspective view showing modification of the optical-fiber support member 30 provided in the optical connector 1F. The optical connector 1F may include an optical-fiber support member 30A shown in FIG. 28 instead of the optical-fiber support member 30 shown in FIG. 27. The optical-fiber support member 30A does not have the fixation surface 30g unlike the optical-fiber support member 30, the top surface 30c extends from the front end surface 30a to the rear end surface 30b, and a plurality of V grooves 30i formed in the top surface 30c extend from the front end surface 30a to the rear end surface 30b. The covering portions 15 of the plurality of optical fibers 10 are respectively placed on the plurality of V grooves 30i. The plurality of optical fibers 10 that have been rotationally aligned are then accommodated and fixed in the plurality of V grooves 30i, respectively. The cover 29 (see FIG. 26) in the form of a rectangular plate is provided on the plurality of V grooves 30i to cover the covering portions 15 of the plurality of optical fibers 10. Even in such a form, the same or similar effect as that of the optical connector 1F described above can be obtained.

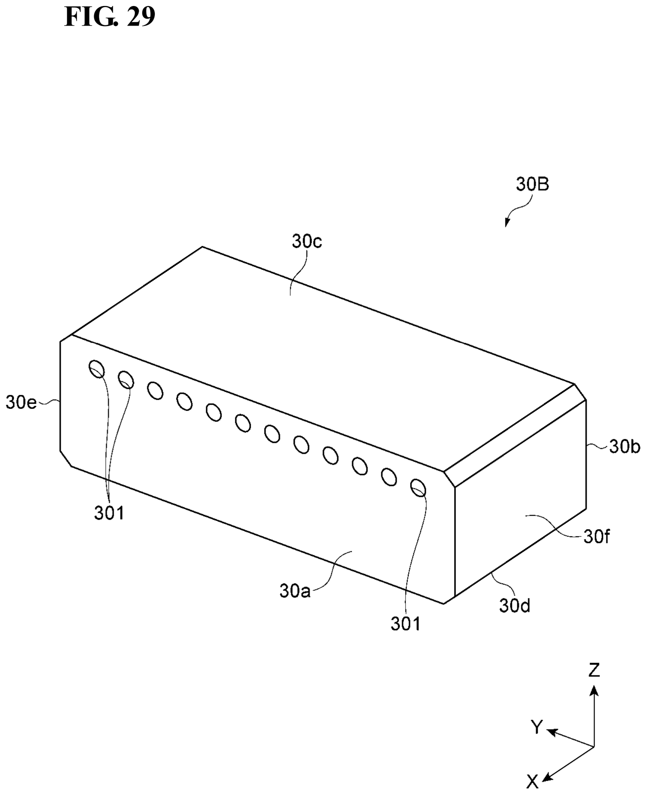

FIG. 29 is a perspective view showing another modification of the optical-fiber support member 30 provided in the optical connector 1F. The optical connector 1F may include an optical-fiber support member 30B shown in FIG. 29 instead of the optical-fiber support member 30 shown in FIG. 27. The optical-fiber support member 30B does not have the fixation surface 30g, unlike the optical-fiber support member 30, and the top surface 30c extends from the front end surface 30a to the rear end surface 30b. The optical-fiber support member 30B includes a plurality of through holes 301 instead of the plurality of V grooves 30h. The plurality of through holes 301 extend through in the X direction from the front end surface 30a to the rear end surface 30b, and are arranged along the Y direction. For example, the tip portion 14 and the covering portion 15 of the optical fiber 10 are inserted into each of the through holes 301, and the tip portion 14 and the covering portion 15 are fixed in the through hole 301 by means of an adhesive. Even in such a form, the same or similar effect as that of the optical connector 1F described above can be obtained. In addition, only the tip portion 14 of the optical fiber 10 may be inserted into the through hole 301, or only the covering portion 15 of the optical fiber 10 may be inserted into the through hole 301.

The present disclosure is not limited to the above-described embodiments and modifications, and various modifications can be made. For example, the embodiments and modifications described above may be combined with each other within a consistent range in accordance with the required object and effect. The configuration of the optical connector is not limited to the embodiments and modifications described above. For example, the insertion hole may also be configured to include a large-diameter portion between the tapered portion and the inner wall surface in addition to the tapered portion described above. In this case, the large-diameter portion has a constant inside diameter that is larger than the inside diameter of the holding part and that can hold the covering portion of the optical fiber. The tapered portion and the large-diameter portion may be configured as an introduction portion for introducing the tip portion of the optical fiber into the holding part.

### REFERENCE SIGNS LIST

1, 1A, 1B, 1C, 1D, 1E, 1F optical connector
1a First optical connector
1b Second optical connector
10 optical fiber
10a tip
11 glass part
11a core
11b cladding
12 resin covering
13, 13A, 13B tape-shaped resin (support member)
13a end surface
13b bottom surface
13c step surface
14 tip portion
15 covering portion
15a covering end
20, 20A, 20B, 20C, 20D, 20E optical connector ferrule
21 front end surface
22 rear end surface
22a opening
23 guide hole
24, 24A, 24B, 24C, 24D, 24E introduction hole
25 insertion hole
26 inner wall surface
27 holding part
28 tapered portion
29 cover
30, 30A, 30B optical-fiber support member (support member)
30a front end surface
30b rear end surface
30c top surface
30d lower surface
30e side surface
30f side surface
30g fixation surface
30h, 30i V groove
30s step surface
31 lower surface
32, 32A, 32B, 32C top surface
33, 33A, 33B side surface (first side surface)
34, 34A, 34B side surface (second side surface)
35 window
37, 37A projection
37a abutment surface
45, 45A protruding portion
46, 46A recess
50 spacer
50a opening
100 optical coupling structure
301 through hole
C, C1 center axis
D, D1 distance
D distance
T tape fiber

## Claims

1. An optical connector ferrule into which a support member configured to support a plurality of optical fibers is insertable, the plurality of optical fibers each including a covering portion covered by a resin covering and a tip portion of a glass part protruding from a covering end of the covering portion, the optical connector ferrule comprising:
a front end surface;
a rear end surface, the rear end surface and the front end surface being arranged side by side in a first direction;
an inner wall surface formed between the front end surface and the rear end surface and intersecting the first direction;
an introduction hole into which the support member is able to be introduced from the rear end surface, the introduction hole extending from the rear end surface to the inner wall surface in the first direction; and
a plurality of insertion holes into each of which the tip portion of a corresponding one of the plurality of optical fibers protruding from an end surface of the support member is insertable, the plurality of insertion holes extending from the inner wall surface toward the front end surface in the first direction and being arranged side by side in a second direction intersecting the first direction,
wherein each of a plurality of the insertion holes includes at least
a holding part extending between the inner wall surface and the front end surface in the first direction and having a constant inside diameter enabling the holding part to hold the tip portion, and
wherein a length of each of the insertion holes in the first direction is 1.5 mm or less.

2. The optical connector ferrule according to claim 1,
wherein each of a plurality of the insertion holes extends from the holding part to the inner wall surface in the first direction and further includes
a tapered portion having a diameter decreasing from the inner wall surface toward the holding part.

3. The optical connector ferrule according to claim 1 or claim 2,
wherein the introduction hole includes
an abutment surface configured such that the support member abuts against the abutment surface in the first direction, the abutment surface being formed at a position away from the inner wall surface in the first direction.

4. The optical connector ferrule according to claim 3,
wherein a distance between the inner wall surface and the abutment surface in the first direction is 0.5 mm to 2 mm.

5. The optical connector ferrule according to any one of claim 1 to claim 4,
wherein the introduction hole includes
a lower surface extending between the inner wall surface and the rear end surface in the first direction and the second direction, and
a top surface facing the lower surface, and
wherein the top surface is inclined with respect to the lower surface such that a space between the top surface and the lower surface narrows from the rear end surface toward the inner wall surface.

6. The optical connector ferrule according to any one of claim 1 to claim 5,
wherein the introduction hole includes
a first side surface and a second side surface facing each other in the second direction between the inner wall surface and the rear end surface, and
wherein the first side surface and the second side surface are inclined with respect to a plane perpendicular to the second direction such that a space between the first side surface and the second side surface narrows from the rear end surface toward the inner wall surface.

7. The optical connector ferrule according to any one of claim 1 to claim 4,
wherein the introduction hole includes
a lower surface configured to face a bottom surface of the support member introduced in the introduction hole,
wherein the lower surface extends between the inner wall surface and the rear end surface in the first direction and the second direction,
wherein a protruding portion extending in the first direction is formed at the lower surface or the bottom surface,
wherein a recess engageable with the protruding portion is formed at the lower surface or the bottom surface, and
wherein the recess is formed at the bottom surface when the protruding portion is formed at the lower surface, and the recess is formed at the lower surface when the protruding portion is formed at the bottom surface.

8. An optical connector comprising:
the optical connector ferrule according to any one of claim 1 to claim 7;
the plurality of optical fibers; and
the support member configured to be inserted in a state of supporting the plurality of optical fibers into the optical connector ferrule.

9. The optical connector according to claim 8,
wherein the support member is a resin layer surrounding only the covering portion of each of the plurality of optical fibers.

10. The optical connector according to claim 8,
wherein the support member is a resin layer surrounding only the tip portion of each of the plurality of optical fibers.

11. The optical connector according to claim 8,
wherein the support member has a plurality of V grooves extending in the first direction and arranged side by side in the second direction, the plurality of V grooves being each configured to accommodate a corresponding one of the plurality of optical fibers.

12. The optical connector according to claim 8,
wherein the support member has a plurality of through holes into each of which a corresponding one of the plurality of optical fibers is inserted, the plurality of through holes extending through the support member in the first direction and being arranged side by side in the second direction.

13. The optical connector according to any one of claim 8 to claim 12,
wherein each of the plurality of optical fibers is one of a multi-core fiber, a polarization maintaining fiber, and a bundle fiber.

14. An optical coupling structure comprising:
a first optical connector and a second optical connector each as the optical connector according to any one of claim 8 to claim 13,
wherein the first optical connector is disposed so as to face the second optical connector in the first direction and is optically coupled to the second optical connector.
